(19) Europäisches Patentamt
European Patent Office
Office européen des brevets

(11) **EP 4 560 965 A1**

(12) **EUROPEAN PATENT APPLICATION**
published in accordance with Art. 153(4) EPC

(43) Date of publication:
**28.05.2025 Bulletin 2025/22**

(51) International Patent Classification (IPC):
***H04L 5/00*** *(2006.01)*

(21) Application number: **23851950.8**

(52) Cooperative Patent Classification (CPC):
**H04L 5/00**

(22) Date of filing: **10.08.2023**

(86) International application number:
**PCT/CN2023/112320**

(87) International publication number:
**WO 2024/032730 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 CN 202210957863**

(71) Applicant: **Huawei Technologies Co., Ltd.
Shenzhen, Guangdong 518129 (CN)**

(72) Inventors:
• **LI, Cheng
Shenzhen, Guangdong 518129 (CN)**
• **WANG, Yi
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **RESOURCE INDICATION METHOD AND COMMUNICATION APPARATUS**

(57) This application discloses a resource indication method and a communication apparatus, to enable a first communication apparatus to flexibly reserve a positioning reference signal resource, and implement sidelink positioning between the first communication apparatus and a second communication apparatus. The method includes: A first communication apparatus determines sidelink control information SCI, where the SCI indicates M positioning reference signal resources, the M positioning reference signal resources correspond to N time units, each time unit corresponds to at least one positioning reference signal resource, and both M and N are integers greater than or equal to 1, the N time units include P preconfigured positioning reference signal resources, or a resource pool in which the N time units are located includes P preconfigured positioning reference signal resources; and the M positioning reference signal resources are a part or all of the P preconfigured positioning reference signal resources, and P is an integer greater than or equal to 1. The first communication apparatus sends the SCI to a second communication apparatus.

FIG. 6

**Description**

This application claims priority to Chinese Patent Application No. 202210957863.2, filed with the China National Intellectual Property Administration on August 10, 2022 and entitled "RESOURCE INDICATION METHOD AND COMMUNICATION APPARATUS", which is incorporated herein by reference in its entirety.

**TECHNICAL FIELD**

This application relates to the field of communication technologies, and in particular, to a resource indication method and a communication apparatus.

**BACKGROUND**

In a sidelink (sidelink, SL) communication system, communication transmission may be performed between terminal devices by using a sidelink. A positioning reference signal may be transmitted between different terminal devices, to implement sidelink positioning between the terminal devices.

Currently, a minimum scheduling resource in the sidelink communication system is a subchannel. To be specific, a segment of spectrum (including one or more subchannels) in a single slot can be allocated to only one user. Therefore, a terminal device can reserve only one subchannel or several subchannels, and transmit a positioning reference signal by using the reserved subchannel. It can be learned that, in the foregoing technical solution, flexibility of reserving a resource by the terminal device is poor.

**SUMMARY**

This application provides a resource indication method and a communication apparatus, to enable a first communication apparatus to flexibly reserve a positioning reference signal resource, thereby implementing sidelink positioning between the first communication apparatus and a second communication apparatus.

A first aspect of this application provides a resource indication method, including:
A first communication apparatus determines sidelink control information (sidelink control information, SCI), where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1; and the first communication apparatus sends the SCI to a second communication apparatus.

In the foregoing technical solution, the first communication apparatus may preselect the M positioning reference signal resources from the P preconfigured positioning reference signal resources, and indicate or reserve the M positioning reference signal resources for the second communication apparatus based on the SCI. It can be learned that a granularity of resource reservation performed by a terminal device is a reference signal resource, and the P preconfigured reference signal resources may be flexibly configured in a preconfiguration manner. This helps improve flexibility of reserving a positioning reference signal resource by the first communication apparatus, and reduce complexity of reserving the positioning reference signal resource by the first communication apparatus. The second communication apparatus may determine, based on the SCI, that the first communication apparatus is to send a positioning reference signal on the M positioning reference signal resources corresponding to the N time units. In this way, the second communication apparatus receives, on the M positioning reference signal resources corresponding to the N time units, the positioning reference signal sent by the first communication apparatus, thereby implementing sidelink positioning between the first communication apparatus and the second communication apparatus.

A second aspect of this application provides a resource indication method. The method includes:
A second communication apparatus receives SCI from a first communication apparatus, where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1; and the second communication apparatus receives a positioning reference signal from the first communication apparatus based on the SCI.

In the foregoing technical solution, the second communication apparatus receives the SCI from the first communication apparatus, where the SCI indicates or is for reserving the M positioning reference signal resources. In this case, the second communication apparatus may receive, based on the SCI, that the first communication apparatus is to receive the positioning reference signal on the M positioning reference signal resources corresponding to the N time units. In this way, sidelink positioning between the first communication apparatus and the second communication apparatus is implemented. Further, a granularity of resource reservation performed by a terminal device is a reference signal resource, and the P preconfigured reference signal resources may be flexibly configured in a preconfiguration manner. This helps improve flexibility of reserving a resource by the first communication apparatus, and reduce complexity of reserving the resource by the first communication apparatus.

Based on the first aspect or the second aspect, in a possible implementation, M is greater than or equal to N, and P is greater than or equal to M.

Based on the first aspect or the second aspect, in a possible implementation, the first communication apparatus is a first terminal device, and the second communication apparatus is a second terminal device; the first communication apparatus is a terminal device, and the second communication apparatus is a roadside unit (roadside unit, RSU); or the first communication apparatus is an RSU, and the second communication apparatus is a terminal device.

Based on the first aspect or the second aspect, in a possible implementation, the SCI further indicates or is further for reserving the N time units.

In this implementation, the SCI may further indicate or may be further for reserving the N time units. This helps improve efficiency of reserving a positioning reference signal resource by the first communication apparatus.

Based on the first aspect or the second aspect, in a possible implementation, the SCI includes a first field, and the first field indicates or is for reserving the M positioning reference signal resources.

In this implementation, the first communication apparatus may indicate or reserve the M positioning reference signal resources based on the first field in the SCI, so that the second communication apparatus determines the M positioning reference signal resources. For example, the first field indicates or is for reserving indexes or identifiers of the M positioning reference signal resources.

Based on the first aspect or the second aspect, in a possible implementation, a length of the first field is determined based on a maximum quantity of time units that can be indicated or reserved by the SCI or a maximum quantity of positioning reference signal resources that can be indicated or reserved by the SCI.

In this implementation, factors considered in designing the length of the first field are shown. Specifically, the length of the first field may be designed with reference to the maximum quantity of time units or the maximum quantity of positioning reference signal resources that can be indicated or reserved by SCI.

Based on the first aspect or the second aspect, in a possible implementation, when the N time units include the P preconfigured positioning reference signal resources, each time unit includes a same quantity of preconfigured positioning reference signal resources; and

the length of the first field is determined based on the maximum quantity of time units that can be indicated or reserved by the SCI and the quantity of preconfigured positioning reference signal resources included in each time unit; or the length of the first field is determined based on the maximum quantity of positioning reference signal resources that can be indicated or reserved by the SCI and the quantity of preconfigured positioning reference signal resources included in each time unit.

In this implementation, the N time units include the P preconfigured positioning reference signal resources. In other words, positioning reference signal resources are configured at a granularity of a time unit. Two possible implementations of the length of the first field in a case of a same quantity of preconfigured positioning reference signal resources included in each time unit are shown. Usually, a quantity of preconfigured positioning reference signals included in each time unit is less than a quantity of subchannels in full bandwidth. It can be learned from a consideration factor of designing the length of the first field that, in the technical solution of this application, the length of the first field may be designed to be short, so that overheads of indicating or reserving a positioning reference signal resource by the first communication apparatus are reduced.

Based on the first aspect or the second aspect, in a possible implementation, when the resource pool in which the N time units are located includes the P preconfigured positioning reference signal resources, the N time units belong to a same resource pool; and

the length of the first field is determined based on the maximum quantity of time units that can be indicated or reserved by the SCI and a quantity of preconfigured positioning reference signal resources included in the resource pool; or the length of the first field is determined based on the maximum quantity of positioning reference signal resources that can be indicated or reserved by the SCI and a quantity of preconfigured positioning reference signal resources included in the resource pool.

In this implementation, the resource pool in which the N time units are located includes the P preconfigured positioning reference signal resources. In other words, positioning reference signal resources are configured at a granularity of a resource pool. Two possible implementations of the length of the first field in a case of a same quantity of preconfigured positioning reference signal resources included in the resource pool are shown. Usually, the quantity of preconfigured positioning reference signal resources included in the resource pool is less than a quantity of subchannels in full bandwidth. It can be learned from a consideration factor of designing the length of the first field that, in the technical solution of this application, the length of the first field may be designed to be short, so that overheads of indicating or reserving a positioning reference signal resource by the first communication apparatus are reduced.

Based on the first aspect or the second aspect, in a possible implementation, the length of the first field meets the following condition:

$$\left\lceil \log_2 N_{slprs}^{K_{reserve}} \right\rceil \quad \text{or} \quad \left\lceil \log_2 N_{slprs}^{K_{reserve}} \right\rceil + X \ ,$$

where

$\left\lceil \log_2 N_{slprs}^{K_{reserve}} \right\rceil$ represents rounding on $\log_2 N_{slprs}^{K_{reserve}}$, $\log_2 N_{slprs}^{K_{reserve}}$ represents calculating the logarithm of $N_{slprs}^{K_{reserve}}$ with a base 2, $N_{slprs}$ represents the quantity of preconfigured positioning reference signal resources included in each time unit, and $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X may be equal to -1, -2, -3, 0, 1, 2, 3, or the like.

In an implementation in which the first field indicates the M positioning reference signal resources, a possible implementation of the length of the first field is shown. Usually, a quantity of preconfigured positioning reference signals included in each time unit is less than a quantity of subchannels in full bandwidth. It can be learned from the condition that the length of the first field meets that, in the technical solution of this application, the length of the first field may be designed to be short, so that overheads of indicating or reserving a positioning reference signal resource by the first communication apparatus are reduced.

Based on the first aspect or the second aspect, in a possible implementation, the length of the first field meets the following condition:

$$\left\lceil \log_2 Q^{K_{reserve}} \right\rceil \quad \text{or} \quad \left\lceil \log_2 Q^{K_{reserve}} \right\rceil + X \ ,$$

where

$\left\lceil \log_2 Q^{K_{reserve}} \right\rceil$ represents rounding on $\log_2 Q^{K_{reserve}}$, $\log_2 Q^{K_{reserve}}$ represents calculating the logarithm of $Q^{K_{reserve}}$ with a base 2, Q represents the quantity of preconfigured positioning reference signal resources included in the resource pool, and $K_{reserve}$ : represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X may be equal to -1, -2, -3, 0, 1, 2, 3, or the like.

In an implementation in which the first field indicates the M positioning reference signal resources, a possible implementation of the length of the first field is shown. Usually, a quantity of preconfigured positioning reference signals included in the resource pool is less than a quantity of subchannels in full bandwidth. It can be learned from the condition that the length of the first field meets that, in the technical solution of this application, the length of the first field may be designed to be short, so that overheads of indicating or reserving a positioning reference signal resource by the first communication apparatus are reduced.

Based on the first aspect or the second aspect, in a possible implementation, the length of the first field meets the following condition:

$$\left\lceil \log_2 \left[ \left(N_{slprs}\right)^{k_{reserve}-k_0} + k_1 \right] \right\rceil,$$

where

$N_{slprs}$ represents the quantity of preconfigured positioning reference signal resources included in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient. For example, $k_1=k_0$, $k_1=k_{reserve}$, or $k_1 = N_{slprs}$.

Based on the first aspect or the second aspect, in a possible implementation, the length of the first field meets the following condition:

$$\left\lceil log_2 \left[ \left(N_{slprs}\right)^{k_{reserve}-k_0} + \left(N_{slprs}\right)^{k_{reserve}-k_0-1} + \cdots \left(N_{slprs}\right)^0 + a \right] \right\rceil,$$

where

$N_{slprs}$ represents the quantity of preconfigured positioning reference signal resources included in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = N_{slprs}$.

Based on the first aspect or the second aspect, in a possible implementation, the length of the first field meets the following condition: $\left\lceil log_2 [(Q)^{k_{reserve}-k_0} + k_1] \right\rceil$, where

$Q$ represents the quantity of preconfigured positioning reference signal resources included in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient. For example, $k_1=k_0$, $k_1=k_{reserve}$, or $k_1 = Q$.

In another possible implementation, the length of the first field meets the following condition:

$$\left\lceil log_2 [(Q)^{k_{reserve}-k_0} + (Q)^{k_{reserve}-k_0-1} + \cdots (Q)^0 + a] \right\rceil,$$

where

$Q$ represents the quantity of preconfigured positioning reference signal resources included in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $a$ is an integer greater than or equal to 0. In a possible implementation, $a=0$, or $a=1$.

In another possible implementation, $a=k_0$, $a = k_{reserve}$, or $a = Q$.

Based on the first aspect or the second aspect, in a possible implementation, the length of the first field is 4W bits, and W is an integer greater than or equal to 1.

Based on the first aspect or the second aspect, in a possible implementation, the length of the first field is 4 bits, 8 bits, or 12 bits.

Based on the first aspect or the second aspect, in a possible implementation, when the SCI indicates or is for reserving only a positioning reference signal resource in one time unit, the length of the first field is 4 bits;

when the SCI indicates or is for reserving positioning reference signal resources in two time units, the length of the first field is 8 bits; or

when the SCI indicates or is for reserving positioning reference signal resources in three time units, the length of the first field is 12 bits.

Based on the first aspect or the second aspect, in a possible implementation, the length of the first field is 8 bits, the 4 most significant bits in the first field indicate a positioning reference signal resource in the 1st time unit in the two time units, and the 4 least significant bits in the first field indicate a positioning reference signal in the 2nd time unit in the two time units.

Based on the first aspect or the second aspect, in a possible implementation, the length of the first field is 8 bits, the 4 least significant bits in the first field indicate a positioning reference signal resource in the 1st time unit in the two time units, and the 4 most significant bits in the first field indicate a positioning reference signal resource in the 2nd time unit in the two time units.

Based on the first aspect or the second aspect, in a possible implementation, $k_{reserve}$ is indicated by using radio resource control (radio resource control, RRC) signaling. For example, in a possible implementation, $k_{reserve}$ is indicated by using an information element in configuration signaling related to a sidelink resource pool in the RRC signaling. For example, $k_{reserve}$ is indicated by using a maximum sidelink reserved (sl-MaxNumPerReserve) information element in configuration signaling related to a sidelink resource pool in the RRC signaling.

Based on the first aspect or the second aspect, in a possible implementation, a calculation formula of the length of the first field may indicate that the length of the first field is related to a maximum quantity of resources or a maximum quantity of time units that can be indicated in each time of sidelink control signaling transmission.

Based on the first aspect or the second aspect, in a possible implementation, the calculation formula of the length of the first field may indicate that only $k_{reserve}$ - $k_0$ positioning reference signal resources need to be indicated in the maximum of $k_{reserve}$ positioning reference signal resources that can be reserved. The other $k_0$ positioning reference signal resources are indicated in another manner. For example, the $k_0$ positioning reference signal resources are indicated by using frequency domain location information or time domain location information of a physical sidelink control channel (physical sidelink control channel, PSCCH) carrying control signaling (for example, SCI). Optionally, the frequency domain location information includes a start frequency or bandwidth. The start frequency includes a start resource block (resource block, RB), a start subchannel, any other frequency-related information, or the like. The bandwidth includes a bandwidth size, for example, a quantity of RBs, a quantity of subchannels, or a quantity of resource elements (resource elements, REs). The time domain location information includes information such as a slot, a start symbol, a subframe, and/or a frame.

Based on the first aspect or the second aspect, in a possible implementation, a value of the first field meets the following condition:

$$I_1 + I_2 \times N_{slprs} + \cdots I_N \times \left(N_{slprs}\right)^{N-1}, \text{ or } I_1 + I_2 \times N_{slprs} + \cdots I_N \times \left(N_{slprs}\right)^{N-1} + \mathrm{Y},$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In an implementation in which the first field indicates the M positioning reference signal resources, a possible condition that the value of the first field meets is shown. In this way, the second communication apparatus can determine, based on the foregoing condition, a positioning reference signal resource reserved by the first communication apparatus in each of the N time units. This facilitates the second communication apparatus in receiving a positioning reference signal of the first communication apparatus on a corresponding positioning reference signal resource.

Based on the first aspect or the second aspect, in a possible implementation, a value of the first field meets the following condition:

$$I_1 + I_2 \times N_{slprs} + \cdots I_N \times \left(N_{slprs}\right)^{N-1} - 1, \text{ or } I_1 + I_2 \times N_{slprs} + \cdots I_N \times \left(N_{slprs}\right)^{N-1} - 1 + \mathrm{Y},$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In an implementation in which the first field indicates the M positioning reference signal resources, another possible condition that the value of the first field meets is shown. In this way, the second communication apparatus can determine, based on the foregoing condition, a positioning reference signal resource reserved by the first communication apparatus in each of the N time units. This facilitates the second communication apparatus in receiving a positioning reference signal of the first communication apparatus on a corresponding positioning reference signal resource.

Based on the first aspect or the second aspect, in a possible implementation, a value of the first field meets the following condition:

$$I_1 + I_2 \times Q + \cdots I_N \times (Q)^{N-1}, \text{ or } I_1 + I_2 \times Q + \cdots I_N \times (Q)^{N-1} + Y,$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In an implementation in which the first field indicates the M positioning reference signal resources, another possible condition that the value of the first field meets is shown. In this way, the second communication apparatus can determine, based on the foregoing condition, a positioning reference signal resource reserved by the first communication apparatus in each of the N time units. This facilitates the second communication apparatus in receiving a positioning reference signal of the first communication apparatus on a corresponding positioning reference signal resource.

Based on the first aspect or the second aspect, in a possible implementation, a value of the first field meets the following condition:

$$I_1 + I_2 \times Q + \cdots I_N \times (Q)^{N-1} - 1, \text{ or } I_1 + I_2 \times Q + \cdots I_N \times (Q)^{N-1} - 1 + Y,$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In an implementation in which the first field indicates the M positioning reference signal resources, another possible condition that the value of the first field meets is shown. In this way, the second communication apparatus can determine, based on the foregoing condition, a positioning reference signal resource reserved by the first communication apparatus in each of the N time units. This facilitates the second communication apparatus in receiving a positioning reference signal of the first communication apparatus on a corresponding positioning reference signal resource.

Based on the first aspect or the second aspect, in a possible implementation, the SCI includes a first field, and the first field indicates or is for reserving the M positioning reference signal resources and the N time units.

In this implementation, the first communication apparatus may indicate the M positioning reference signal resources and the N time units by using the first field. Therefore, the second communication apparatus determines the M positioning reference signal resources corresponding to the N time units.

Based on the first aspect or the second aspect, in a possible implementation, frequency bands occupied by different positioning reference signal resources in the P preconfigured positioning reference signal resources have an overlapping part.

In this implementation, frequency bands occupied by different positioning reference signal resources have an overlapping part, which helps improve resource utilization.

Based on the first aspect or the second aspect, in a possible implementation, each positioning reference signal resource in the P preconfigured positioning reference signal resources occupies a part or all of bandwidth of the resource pool.

In this implementation, the first communication apparatus indicates or reserves the M positioning reference signal resources corresponding to the N time units, and sends positioning reference signals based on the M positioning reference signal resources corresponding to the N time units. Because positioning accuracy is strongly related to signal bandwidth, the positioning reference signal resource occupies all of the bandwidth of the resource pool, thereby improving positioning accuracy of the first communication apparatus. Further, the M positioning reference signal resources are a part of the P preconfigured positioning reference signal resources, and the remaining positioning reference signal resources may be used by other users. In this way, a plurality of users send positioning reference signal resources in one slot, and bandwidth used by each user to send a positioning reference signal is the bandwidth of the resource pool. In this way, resources can be reused by a plurality of users, thereby improving a system capacity. Positioning accuracy of a user is ensured while ensuring multi-user multiplexing.

Based on the first aspect or the second aspect, in a possible implementation, when the N time units include the P preconfigured positioning reference signal resources, configurations of preconfigured positioning reference signal resources included in different time units are the same.

In this implementation, configurations of preconfigured positioning reference signal resources included in different time units may be the same, so that implementation of the solution is facilitated, and configuration of a positioning reference signal resource of a system is simpler.

Based on the first aspect, in a possible implementation, the method further includes:

The first communication apparatus receives downlink control information (downlink control information, DCI) from a third communication apparatus, where the DCI indicates the first communication apparatus to reserve the M positioning reference signal resources. The third communication apparatus may be a network device. For example, the third communication apparatus is an access network device.

In this implementation, the third communication apparatus may schedule the first communication apparatus to reserve the M positioning reference signal resources, to implement sidelink positioning between the first communication apparatus and the second communication apparatus.

Based on the first aspect, in a possible implementation, the DCI further indicates the first communication apparatus to reserve the N time units.

Based on the first aspect, in a possible implementation, the method further includes:

The first communication apparatus receives configuration information from the third communication apparatus, where the configuration information is for configuring the P preconfigured positioning reference signal resources.

In this implementation, the first communication apparatus may receive the configuration information from the third communication apparatus, to configure the P positioning reference signal resources. A manner in which the third communication apparatus preconfigures a positioning reference signal resource helps improve flexibility of the solution, and reduce complexity of reserving a resource by the first communication apparatus.

Based on the first aspect or the second aspect, in a possible implementation, the SCI further includes a second field, and the second field is for reserving the N time units.

In this implementation, the first communication apparatus may reserve the N time units based on the second field, to help improve resource reservation efficiency of the first communication apparatus.

Based on the first aspect or the second aspect, in a possible implementation, a length of the second field is determined based on a maximum quantity of time units that can be indicated or reserved by the SCI or a maximum quantity of positioning reference signal resources that can be indicated or reserved by the SCI.

In this implementation, factors considered in designing the length of the second field are shown. Specifically, the length of the second field may be designed with reference to the maximum quantity of time units or the maximum quantity of positioning reference signal resources that can be indicated or reserved by SCI.

Based on the first aspect or the second aspect, in a possible implementation, when the N time units include two slots, the length of the second field is 5 bits; or when the N time units include three slots, the length of the second field is 9 bits.

Based on the first aspect or the second aspect, in a possible implementation, when the N time units include the P preconfigured positioning reference signal resources, different positioning reference signal resources in preconfigured positioning reference signal resources included in each time unit meet a frequency division multiplexing relationship on a same time domain resource;

when the N time units include the P preconfigured positioning reference signal resources, different positioning reference signal resources in preconfigured positioning reference signal resources included in each time unit meet a time division multiplexing relationship on a same frequency domain resource; or

when the N time units include the P preconfigured positioning reference signal resources, in preconfigured positioning reference signal resources included in each time unit, positioning reference signal resources occupying a same time domain resource meet a frequency division multiplexing relationship on a same time domain resource, and positioning reference signal resources occupying a same frequency domain resource meet a time division multiplexing relationship on a same frequency domain resource.

In this implementation, different positioning reference signal resources in each time unit meet the frequency division multiplexing relationship and/or the time division multiplexing relationship. A plurality of positioning reference signal resources included in one time unit may be used by a plurality of users, so that the plurality of users send positioning reference signals in one time unit. In addition, there is small or no signal interference between different users is small, which helps improve a system capacity.

A third aspect of this application provides a first communication apparatus, including:

a processing module, configured to determine SCI, where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1; and

a transceiver module, configured to send the SCI to a second communication apparatus.

A fourth aspect of this application provides a second communication apparatus, including:

a transceiver module, configured to: receive SCI from a first communication apparatus, where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1; and receive a positioning reference signal from the first communication apparatus based on the SCI.

Based on the third aspect or the fourth aspect, in a possible implementation, M is greater than or equal to N, and P is greater than or equal to M.

Based on the third aspect or the fourth aspect, in a possible implementation, the first communication apparatus is a first terminal device, and the second communication apparatus is a second terminal device; the first communication apparatus is a terminal device, and the second communication apparatus is an RSU; or the first communication apparatus is an RSU, and the second communication apparatus is a terminal device.

Based on the third aspect or the fourth aspect, in a possible implementation, the SCI further indicates or is further for reserving the N time units.

Based on the third aspect or the fourth aspect, in a possible implementation, the SCI includes a first field, and the first field indicates or is for reserving the M positioning reference signal resources.

Based on the third aspect or the fourth aspect, in a possible implementation, a length of the first field is determined based on a maximum quantity of time units that can be indicated or reserved by the SCI or a maximum quantity of positioning reference signal resources that can be indicated or reserved by the SCI.

Based on the third aspect or the fourth aspect, in a possible implementation, when the N time units include the P preconfigured positioning reference signal resources, each time unit includes a same quantity of preconfigured positioning reference signal resources; and

the length of the first field is determined based on the maximum quantity of time units that can be indicated or reserved by the SCI and the quantity of preconfigured positioning reference signal resources included in each time unit; or the length of the first field is determined based on the maximum quantity of positioning reference signal resources that can be indicated or reserved by the SCI and the quantity of preconfigured positioning reference signal resources included in each time unit.

Based on the third aspect or the fourth aspect, in a possible implementation, when the resource pool in which the N time units are located includes the P preconfigured positioning reference signal resources, the N time units belong to a same resource pool; and

the length of the first field is determined based on the maximum quantity of time units that can be indicated or reserved by the SCI and a quantity of preconfigured positioning reference signal resources included in the resource pool; or the length of the first field is determined based on the maximum quantity of positioning reference signal resources that can be indicated or reserved by the SCI and a quantity of preconfigured positioning reference signal resources included in the resource pool.

Based on the third aspect or the fourth aspect, in a possible implementation, the length of the first field meets the following condition:

$$\left\lceil \log_2 N_{slprs}{}^{K_{reserve}} \right\rceil \text{ or } \left\lceil \log_2 N_{slprs}{}^{K_{reserve}} \right\rceil + X \text{ ,}$$

where

$$\left\lceil \log_2 N_{slprs}{}^{K_{reserve}} \right\rceil$$

represents rounding on $\log_2 N_{slprs}{}^{Kreserve}$, $\log_2 N_{slprs}{}^{Kreserve}$ represents calculating the logarithm of $N_{slprs}{}^{Kreserve}$ with a base 2, and $N_{slprs}$ represents the quantity of preconfigured positioning reference signal resources included in each time unit. $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X may be equal to -1, -2, -3, 0, 1, 2, 3, or the like.

Based on the third aspect or the fourth aspect, in a possible implementation, the length of the first field meets the following condition:

$$\left\lceil \log_2 Q^{K_{reserve}} \right\rceil \text{ or } \left\lceil \log_2 Q^{K_{reserve}} \right\rceil + X ,$$

where

$$\left\lceil \log_2 Q^{K_{reserve}} \right\rceil$$

represents rounding on $\log_2 Q^{Kreserve}$, $\log_2 Q^{Kreserve}$ represents calculating the logarithm of $Q^{Kreserve}$ with a base 2, Q represents the quantity of preconfigured positioning reference signal resources included in the resource pool, and $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X may be equal to -1, -2, -3, 0, 1, 2, 3, or the like.

Based on the third aspect or the fourth aspect, in a possible implementation, the length of the first field meets the following condition:

$$\left\lceil log_2 \left[ (N_{slprs})^{k_{reserve}-k_0} + k_1 \right] \right\rceil,$$

where

$N_{slprs}$ represents the quantity of preconfigured positioning reference signal resources included in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient. For example, $k_1=k_0$, $k_1=k_{reserve}$, or $k_1 = N_{slprs}$.

Based on the third aspect or the fourth aspect, in a possible implementation, the length of the first field meets the following condition:

$$\left\lceil log_2 \left[ (N_{slprs})^{k_{reserve}-k_0} + (N_{slprs})^{k_{reserve}-k_0-1} + \cdots (N_{slprs})^0 + a \right] \right\rceil,$$

where

$N_{slprs}$ represents the quantity of preconfigured positioning reference signal resources included in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and a is an integer greater than or equal to 0. In a possible implementation, a=0, or a=1. In another possible implementation, $a=k_0$, $a = k_{reserve}$, or $a = N_{slprs}$.

Based on the third aspect or the fourth aspect, in a possible implementation, the length of the first field meets the following condition:

$$\left\lceil log_2 [(Q)^{k_{reserve}-k_0} + k_1] \right\rceil,$$

where

Q represents the quantity of preconfigured positioning reference signal resources included in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient. For example, $k_1=k_0$, $k_1=k_{reserve}$, or $k_1 = Q$.

In another possible implementation, the length of the first field meets the following condition:

$$[log_2[(Q)^{k_{reserve}-k_0} + (Q)^{k_{reserve}-k_0-1} + \cdots (Q)^0 + a]],$$

where

Q represents the quantity of preconfigured positioning reference signal resources included in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = Q$.

Based on the third aspect or the fourth aspect, in a possible implementation, the length of the first field is 4W bits, and W is an integer greater than or equal to 1.

Based on the third aspect or the fourth aspect, in a possible implementation, the length of the first field is 4 bits, 8 bits, or 12 bits.

Based on the third aspect or the fourth aspect, in a possible implementation, when the SCI indicates or is for reserving only a positioning reference signal resource in one time unit, the length of the first field is 4 bits;

when the SCI indicates or is for reserving positioning reference signal resources in two time units, the length of the first field is 8 bits; or

when the SCI indicates or is for reserving positioning reference signal resources in three time units, the length of the first field is 12 bits.

Based on the third aspect or the fourth aspect, in a possible implementation, the length of the first field is 8 bits, the 4 most significant bits in the first field indicate a positioning reference signal resource in the 1st time unit in the two time units, and the 4 least significant bits in the first field indicate a positioning reference signal in the 2nd time unit in the two time units.

Based on the third aspect or the fourth aspect, in a possible implementation, the length of the first field is 8 bits, the 4 least significant bits in the first field indicate a positioning reference signal resource in the 1st time unit in the two time units, and the 4 most significant bits in the first field indicate a positioning reference signal resource in the 2nd time unit in the two time units.

Based on the third aspect or the fourth aspect, in a possible implementation, $k_{reserve}$ is indicated by using RRC signaling. For example, in a possible implementation, $k_{reserve}$ is indicated by using an information element in configuration signaling related to a sidelink resource pool in the RRC signaling. For example, $k_{reserve}$ is indicated by using a maximum sidelink reserved (sl-MaxNumPerReserve) information element in configuration signaling related to a sidelink resource pool in the RRC signaling.

Based on the third aspect or the fourth aspect, in a possible implementation, a calculation formula of the length of the first field may indicate that the length of the first field is related to a maximum quantity of resources or a maximum quantity of time units that can be indicated in each time of sidelink control signaling transmission.

Based on the third aspect or the fourth aspect, in a possible implementation, the calculation formula of the length of the first field may indicate that only $k_{reserve}$ - $k_0$ positioning reference signal resources need to be indicated in the $k_{reserve}$ positioning reference signal resources that can be reserved. The other $k_0$ positioning reference signal resources are indicated in another manner. For example, the $k_0$ positioning reference signal resources are indicated by using frequency domain location information or time domain location information of a PSCCH carrying control signaling (for example, SCI). Optionally, the frequency domain location information includes a start frequency or bandwidth. The start frequency includes an RB, a start subchannel, any other frequency-related information, or the like. The bandwidth includes a bandwidth size, for example, a quantity of RBs, a quantity of subchannels, or a quantity of REs. The time domain location information includes information such as a slot, a start symbol, a subframe, and/or a frame.

Based on the third aspect or the fourth aspect, in a possible implementation, a value of the first field meets the following condition:

$$I_1 + I_2 \times N_{slprs} + \cdots I_N \times (N_{slprs})^{N-1}, \text{ or } I_1 + I_2 \times N_{slprs} + \cdots I_N \times (N_{slprs})^{N-1} + Y,$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

Based on the third aspect or the fourth aspect, in a possible implementation, a value of the first field meets the following condition:

$$I_1 + I_2 \times N_{slprs} + \cdots I_N \times \left(N_{slprs}\right)^{N-1} - 1, \text{ or } I_1 + I_2 \times N_{slprs} + \cdots I_N \times \left(N_{slprs}\right)^{N-1} - 1 + \text{Y},$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

Based on the third aspect or the fourth aspect, in a possible implementation, a value of the first field meets the following condition:

$$I_1 + I_2 \times \text{Q} + \cdots I_N \times (\text{Q})^{N-1}, \text{ or } I_1 + I_2 \times \text{Q} + \cdots I_N \times (\text{Q})^{N-1} + \text{Y},$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

Based on the third aspect or the fourth aspect, in a possible implementation, a value of the first field meets the following condition:

$$I_1 + I_2 \times \text{Q} + \cdots I_N \times (\text{Q})^{N-1} - 1, \text{ or } I_1 + I_2 \times \text{Q} + \cdots I_N \times (\text{Q})^{N-1} - 1 + \text{Y},$$

where

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

Based on the third aspect or the fourth aspect, in a possible implementation, the SCI includes a first field, and the first field indicates or is for reserving the M positioning reference signal resources and the N time units.

Based on the third aspect or the fourth aspect, in a possible implementation, frequency bands occupied by different positioning reference signal resources in the P preconfigured positioning reference signal resources have an overlapping part.

Based on the third aspect or the fourth aspect, in a possible implementation, each positioning reference signal resource in the P preconfigured positioning reference signal resources occupies a part or all of bandwidth of the resource pool.

Based on the third aspect or the fourth aspect, in a possible implementation, when the N time units include the P preconfigured positioning reference signal resources, configurations of preconfigured positioning reference signal resources included in different time units are the same.

Based on the third aspect, in a possible implementation, the transceiver module is further configured to: receive DCI from a third communication apparatus, where the DCI indicates the first communication apparatus to reserve the M positioning reference signal resources.

Based on the third aspect, in a possible implementation, the DCI further indicates the first communication apparatus to reserve the N time units.

Based on the third aspect, in a possible implementation, the transceiver module is further configured to: receive configuration information from the third communication apparatus, where the configuration information is for configuring the P preconfigured positioning reference signal resources.

Based on the third aspect or the fourth aspect, in a possible implementation, the SCI further includes a second field, and the second field is for reserving the N time units.

Based on the third aspect or the fourth aspect, in a possible implementation, a length of the second field is determined based on a maximum quantity of time units that can be indicated or reserved by the SCI or a maximum quantity of positioning reference signal resources that can be indicated or reserved by the SCI.

Based on the third aspect or the fourth aspect, in a possible implementation, when the N time units include two slots, the length of the second field is 5 bits; or when the N time units include three slots, the length of the second field is 9 bits.

Based on the third aspect or the fourth aspect, in a possible implementation, when the N time units include the P preconfigured positioning reference signal resources, different positioning reference signal resources in preconfigured positioning reference signal resources included in each time unit meet a frequency division multiplexing relationship on a same time domain resource;

when the N time units include the P preconfigured positioning reference signal resources, different positioning reference signal resources in preconfigured positioning reference signal resources included in each time unit meet a time division multiplexing relationship on a same frequency domain resource; or

when the N time units include the P preconfigured positioning reference signal resources, in preconfigured positioning reference signal resources included in each time unit, positioning reference signal resources occupying a same time domain resource meet a frequency division multiplexing relationship on a same time domain resource, and positioning reference signal resources occupying a same frequency domain resource meet a time division multiplexing relationship on a same frequency domain resource.

A fifth aspect of this application provides a communication apparatus. The communication apparatus includes a processor. The processor is configured to invoke and run a computer program stored in a memory, so that the processor implements any implementation of either of the first aspect and the second aspect.

Optionally, the communication apparatus further includes a transceiver. The processor is further configured to control the transceiver to receive and send a signal.

Optionally, the communication apparatus includes the memory. The memory stores the computer program.

A sixth aspect of this application provides a computer program product including instructions. When the computer program product runs on a computer, the computer is enabled to perform any implementation of the first aspect or the second aspect.

A seventh aspect of this application provides a computer-readable storage medium, including computer instructions. When the computer instructions are run on a computer, the computer is enabled to perform any implementation of either of the first aspect and the second aspect.

An eighth aspect of this application provides a chip apparatus, including a processor, configured to: connect to a memory, and invoke a program stored in the memory, to enable the processor to perform any implementation of either of the first aspect and the second aspect.

A ninth aspect of this application provides a communication system. The communication system includes the first communication apparatus according to the third aspect and the second communication apparatus according to the fourth aspect.

According to the foregoing technical solutions, it can be learned that embodiments of this application have the following advantages:

In the foregoing technical solution, the first communication apparatus determines the SCI, where the SCI indicates or is for reserving the M positioning reference signal resources, the M positioning reference signal resources correspond to the N time units, each time unit corresponds to at least one positioning reference signal resource, and both M and N are integers greater than or equal to 1. The N time units include the P preconfigured positioning reference signal resources, or the resource pool in which the N time units are located includes the P preconfigured positioning reference signal resources. The M positioning reference signal resources are a part or all of the P preconfigured positioning reference signal resources, and P is an integer greater than or equal to 1. Then, the first communication apparatus sends the SCI to the second communication apparatus. It can be learned that the first communication apparatus may select the M positioning reference signal resources from the P preconfigured positioning reference signal resources, and indicate or reserve the M positioning reference signal resources for the second communication apparatus based on the SCI. It can be learned that a granularity of resource reservation performed by a terminal device is a reference signal resource, and the P preconfigured reference signal resources may be flexibly configured in a preconfiguration manner. This helps improve flexibility of reserving a positioning reference signal resource by the first communication apparatus, and reduce complexity of reserving the positioning reference signal resource by the first communication apparatus. The second communication apparatus may determine, based on the SCI, that the first communication apparatus is to send a positioning reference signal on the M positioning reference signal resources in the N time units. In this way, the second communication apparatus receives, on corresponding time-frequency resources, the positioning reference signal sent by the first communication apparatus, thereby implementing sidelink positioning between the first communication apparatus and the second communication apparatus.

## BRIEF DESCRIPTION OF DRAWINGS

FIG. 1 is a first diagram of a communication system to which an embodiment of this application is applied;
FIG. 2 is a second diagram of a communication system to which an embodiment of this application is applied;
FIG. 3 is a third diagram of a communication system to which an embodiment of this application is applied;
FIG. 4 is a fourth diagram of a communication system to which an embodiment of this application is applied;
FIG. 5 is a diagram of a comb size according to an embodiment of this application;
FIG. 6 is a diagram of an embodiment of a resource indication method according to an embodiment of this application;
FIG. 7 is a diagram of indicating a positioning reference signal resource by SCI according to an embodiment of this application;
FIG. 8 is a first diagram of a positioning reference signal resource according to an embodiment of this application;
FIG. 9 is a second diagram of a positioning reference signal resource according to an embodiment of this application;
FIG. 10 is a third diagram of a positioning reference signal resource according to an embodiment of this application;
FIG. 11 is a diagram of a first field and a second field included in SCI according to an embodiment of this application;
FIG. 12 is a diagram of a resource pool to which a time-frequency resource used by a first communication apparatus to send SCI belongs and a resource pool to which M positioning reference signal resources corresponding to N time units belong according to an embodiment of this application;
FIG. 13 is a diagram of a structure of a first communication apparatus according to an embodiment of this application;
FIG. 14 is a diagram of a structure of a second communication apparatus according to an embodiment of this application;
FIG. 15 is a diagram of a structure of a terminal device according to an embodiment of this application; and
FIG. 16 is a diagram of a structure of a communication apparatus according to an embodiment of this application.

## DESCRIPTION OF EMBODIMENTS

Embodiments of this application provide a resource indication method and a communication apparatus, to enable a first communication apparatus to flexibly reserve a positioning reference signal resource, and implement sidelink positioning between the first communication apparatus and a second communication apparatus.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

The technical solutions of this application may be applied to a sidelink communication system and a device to device (device to device, D2D) communication system. For example, the sidelink communication system may include an internet of things system. The system may be specifically a vehicle to everything (vehicle to everything, V2X) system, an industrial internet of things system, a smart home system, or the like, such as a public safety (public safety) system, a smart city system, a transportation safety system, an industrial control system, an unmanned driving system, and an industrial robot system.

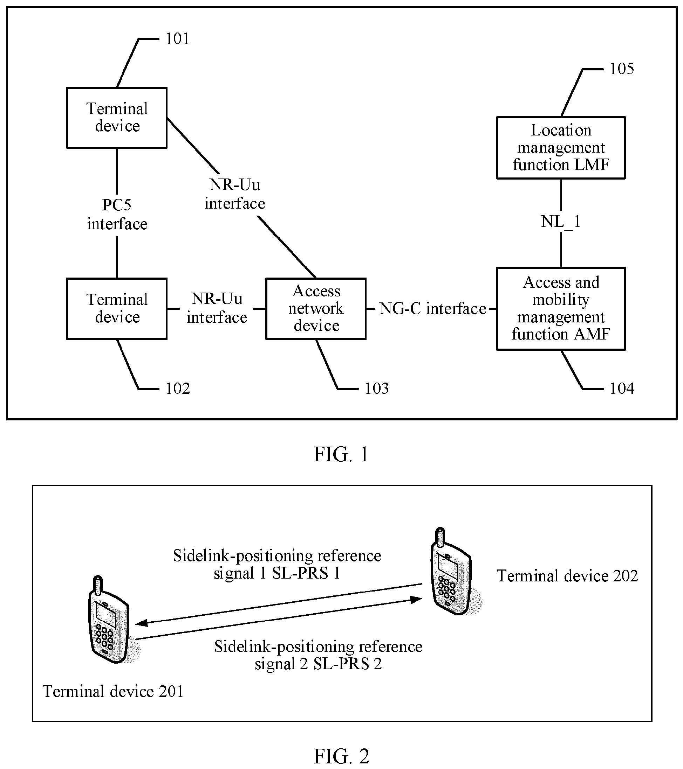

The following describes, with reference to FIG. 1 to FIG. 4, some scenarios to which this application is applicable.

FIG. 1 is a diagram of a structure of a communication system according to an embodiment of this application. Refer to FIG. 1. The communication system includes a terminal device 101, a terminal device 102, an access network device 103, an access and mobility management function (access and mobility management function, AMF) 104, and a positioning management function (location management function, LMF) 105.

Optionally, the terminal device 101 and the terminal device 102 may be connected through an interface. The access network device 103 may be connected to the AMF 104 through an interface, and the AMF 104 may be connected to the LMF 105 through an interface.

For example, the terminal device 101 and the terminal device 102 may be connected through a ProSe communication 5 (prose communication 5, PC5) interface. The terminal device 101 and the terminal device 102 are separately connected to the access network device 103 through NR-Uu interfaces, and the access network device 103 is connected to the AMF 104 through an NG-C interface. The AMF 104 is connected to the LMF 105 through an NL1 interface. The NR-Uu interface is a communication interface between a terminal device and an access network device. The NG-C interface is a control-plane interface between an access network and a core network. The NL1 interface is a communication interface between the AMF and the LMF.

FIG. 1 shows only an example in which the communication system includes the terminal device 101, the terminal device 102, and the access network device 103. In actual application, the communication system may include at least two terminal devices and at least one access network device. This is not specifically limited in this application. The technical solutions in this application are performed between the terminal device 101 and the terminal device 102, to implement sidelink positioning between the terminal device 101 and/or the terminal device 102.

FIG. 2 is a diagram of another embodiment of a communication system according to an embodiment of this application. Refer to FIG. 2. The communication system includes a terminal device 201 and a terminal device 202. The terminal device 201 communicates with the terminal device 202 through a proximity service communication (proximity service communication 5, PC5) interface. The technical solutions in this application are performed between the terminal device 201 and the terminal device 202, to implement sidelink positioning between the terminal device 201 and/or the terminal device 202.

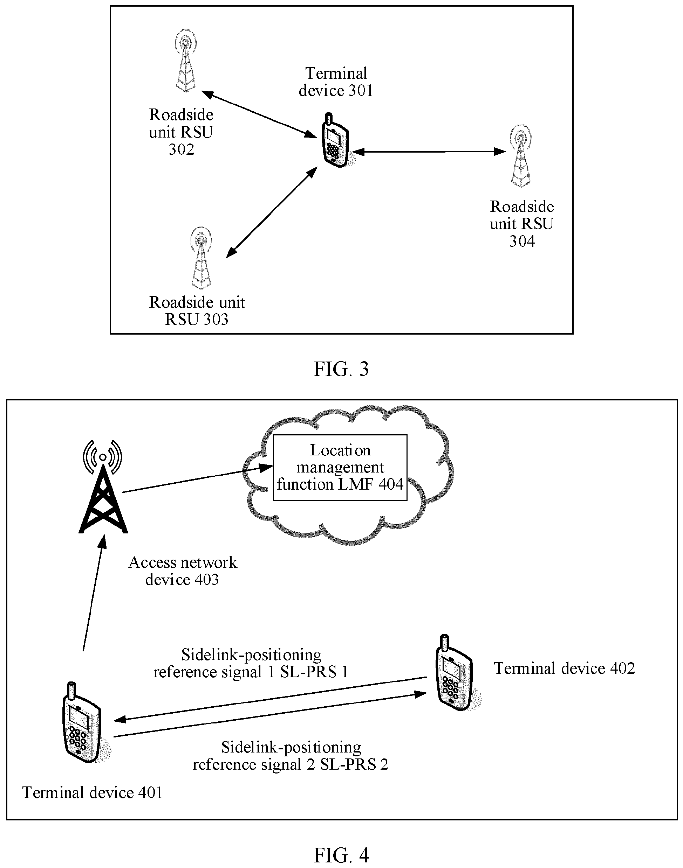

FIG. 3 is a diagram of another embodiment of a communication system according to an embodiment of this application. Refer to FIG. 3. The communication system includes a terminal device 301, an RSU 302, an RSU 303, and an RSU 304. The terminal device 301 and the RSU 302 to the RSU 304 are outside signal coverage of an access network device. As shown in FIG. 3, the terminal device 301 communicates with the RSU through a PC5 interface. The terminal device 301 and the RSU can position the terminal device 301 by using the technical solutions of this application.

It should be noted that, in the communication system shown in FIG. 3, a form of the RSU is merely an example, and is not specifically limited to the RSU in this application.

It should be noted that the RSU is a roadside unit deployed on a roadside, supports sidelink communication and a positioning-related protocol, and can provide a wireless communication function for a terminal device. The RSU may be a roadside station, an access point, or a sidelink device in various forms. For an access network device, the RSU is a terminal device. For a terminal device, the RSU may serve as an access network device.

FIG. 4 is a diagram of another embodiment of a communication system according to an embodiment of this application. The communication system includes a terminal device 401, a terminal device 402, an access network device 403, and an LMF 404. The terminal device 401 is located in signal coverage of the access network device 403, and the terminal device 402 is not located in the signal coverage of the access network device 403. The terminal device 401 and the terminal device 402 may perform technical solutions of this application, and send a corresponding measurement result to the LMF 404 via the access network device 403, so that the LMF 404 positions the terminal device 401 and/or the terminal device 402.

In the communication systems shown in FIG. 1 and FIG. 4, the LMF is a name in a current communication system. In a future communication system, a name of the LMF may change with evolution of the communication system. The name of the LMF is not limited in this application. For example, the LMF may be referred to as a location management device, and the location management device is configured to perform positioning calculation for a location of the terminal device. In a current communication system or a future communication system, any functional network element that has another name and that has a function similar to that of the LMF may be understood as the location management device in embodiments of this application, and is applicable to the communication method provided in embodiments of this application.

The foregoing communication system to which this application is applicable is merely an example. In actual application, this application is further applicable to another communication system with a positioning requirement. This is not specifically limited in this application. The foregoing examples are not intended to limit the technical solutions of this application.

The following describes the terminal device and the access network device in this application.

The terminal device may be a wireless terminal device that can receive scheduling and indication information of the access network device. The wireless terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or a vehicle-mounted device that has a wireless connection function. Currently, some examples of the terminal device are: a mobile phone (mobile phone), a tablet computer, a notebook computer, a palmtop computer, a train, a car, an uncrewed aerial vehicle, an airplane, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal (for example, an uncrewed aerial vehicle or a vehicle) in self driving (self driving), a wireless terminal in a smart grid (smart grid), a wireless terminal in transportation safety (transportation safety), a wireless terminal in a smart city (smart city), and the like. For example, the wireless terminal in the internet of vehicles may be a vehicle-mounted device, an entire vehicle device, a vehicle-mounted module, a vehicle, or the like. The wireless terminal in industrial control may be a robot, or the like.

The access network device is an apparatus that is deployed in a radio access network and that provides the wireless communication function for the terminal device. The access network device may be a radio access network (radio access network RAN) node that enables the terminal device to access a wireless network.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system, or one or a group of (including a plurality of antenna panels) antenna panels of a base station in the 5G mobile communication system. Alternatively, the access network device may be a network node that forms a gNB or a transmission point, for example, a baseband unit (baseband unit, BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of an RRC layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, higher layer signaling (for example, RRC layer signaling) may also be considered to be sent by the DU, or sent by the DU and the AAU.

It may be understood that the access network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The following describes some technical terms in this application.

Configuration information of a positioning reference signal resource mainly indicates information about a time-frequency resource that can be occupied by a reference signal. The configuration information of the positioning reference signal resource includes at least one of the following: a time domain symbol location, a frequency domain location, a comb size corresponding to the positioning reference signal resource, a frequency domain offset value (that is, a quantity of sub-carriers offset relative to a sub-carrier 0), a periodic feature, a sequence identifier corresponding to a positioning reference signal, and an identifier of the positioning reference signal resource. Optionally, the configuration of the positioning reference signal resource may further include some additional information, for example, information such as a reference signal port, a beam direction, and a path loss parameter.

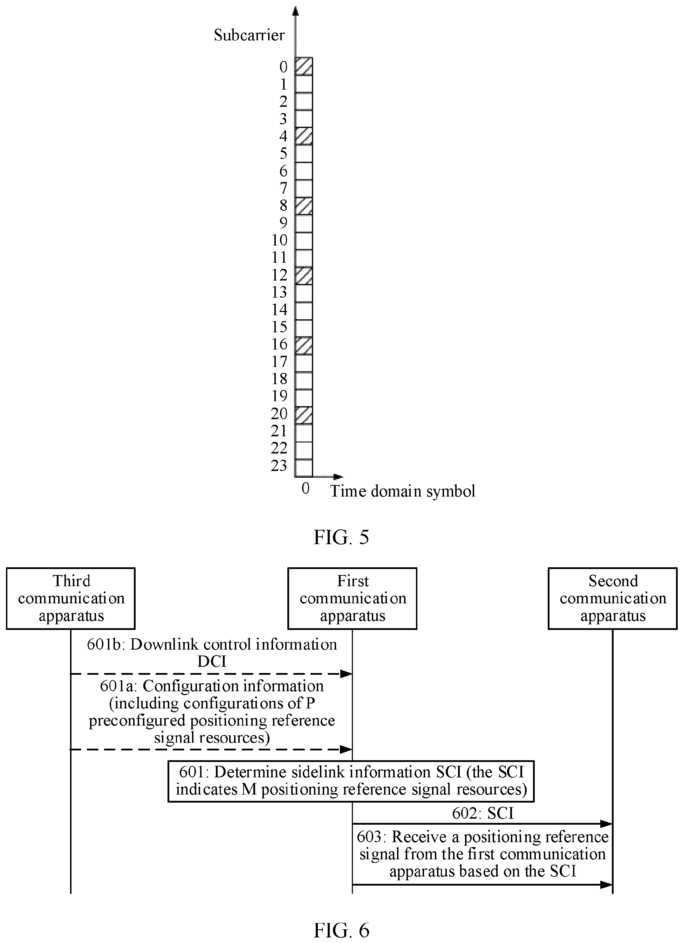

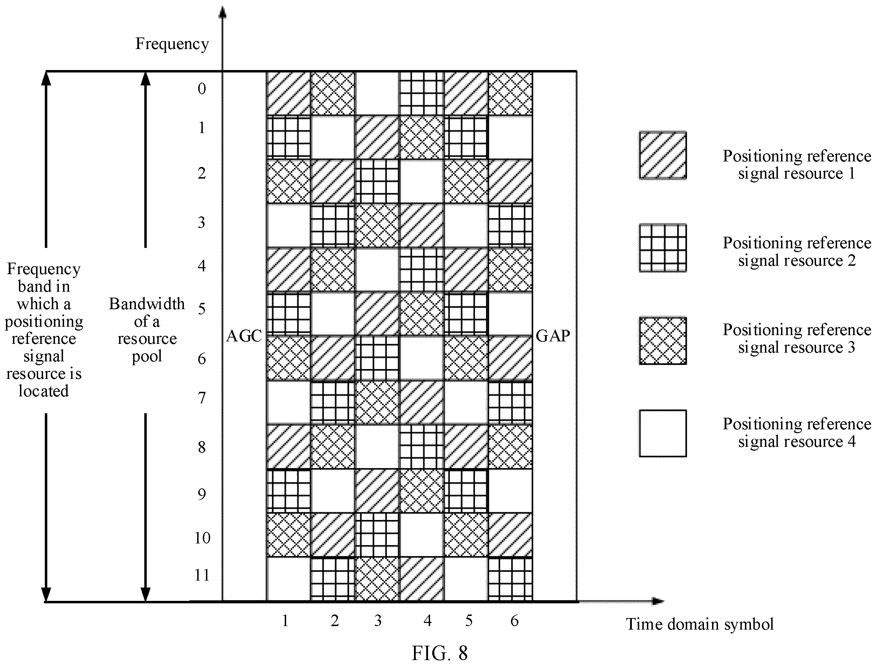

Comb size corresponding to a positioning reference signal resource: Usually, a comb size is a difference between indexes of any two adjacent sub-carriers in sub-carriers occupied by a resource on one time domain symbol, or a quantity of sub-carriers spaced between any two adjacent sub-carriers in sub-carriers occupied by a resource on one time domain symbol plus 1. For example, as shown in FIG. 5, the resource includes time-frequency resources represented by shadow parts in FIG. 5. The resource occupies a sub-carrier 0, a sub-carrier 4, a sub-carrier 8, a sub-carrier 12, a sub-carrier 16, and a sub-carrier 20 on a time domain symbol 0. There are three sub-carriers between the sub-carrier 0 and the sub-carrier 4, and there are three sub-carriers between the sub-carrier 4 and the sub-carrier 8. By analogy, there are also three sub-carriers between the sub-carrier 16 and the sub-carrier 20. It can be learned that the comb size is 4. For a positioning reference signal resource, the positioning reference signal resource occupies at least one time domain symbol. The comb size corresponding to the positioning reference signal resource is a difference between indexes of any two adjacent sub-carriers in sub-carriers occupied by the positioning reference signal resource on each time domain symbol, or a quantity of sub-carriers spaced between any two adjacent sub-carriers in sub-carriers occupied by the positioning reference signal resource on each time domain symbol plus 1. A comb size of the positioning reference signal resource on each time domain symbol is the same. The sub-carriers occupied by the positioning reference signal resource on each time domain symbol are evenly distributed or distributed at an equal interval. For example, as shown in FIG. 8, a comb size of a positioning reference signal resource 1 on each time domain symbol is 4.

Resource pool: At least one resource pool is configured in a sidelink communication system. Each resource pool includes a segment of frequency resources and a group of time resources, for example, a group of slot units. The sidelink communication system may indicate an available frequency domain resource and an available time resource in the resource pool by using signaling. Resource scheduling in the sidelink communication system is performed based on a resource pool. To be specific, a user can schedule, indicate, or reserve only a resource in one resource pool, such as a time resource, a frequency resource, or a positioning reference signal resource. The positioning reference signal resource indicates a time-frequency resource that is for sending a reference signal and that is indicated by reference signal configuration information.

Optionally, a bandwidth part (bandwidth part, BWP) is available bandwidth of the sidelink communication system, and bandwidth of a resource pool is usually less than or equal to the bandwidth part.

Rounding: Rounding includes rounding up, rounding down, or rounding off. For example, rounding W represents rounding up W, rounding down W, or rounding off W.

The communication system to which this application is applicable includes a first communication apparatus and a second communication apparatus. Optionally, the communication system further includes a third communication apparatus.

The following describes some possible implementations of the first communication apparatus and the second communication apparatus.

Implementation 1: The first communication apparatus is a first terminal device, and the second communication apparatus is a second terminal device.

For example, as shown in FIG. 2, the first communication apparatus is the terminal device 201, and the second communication apparatus is the terminal device 202.

Implementation 2: The first communication apparatus is an RSU, and the second communication apparatus is a terminal device.

For example, as shown in FIG. 3, the first communication apparatus is the RSU 302, and the second communication apparatus is the terminal device 301.

Implementation 3: The first communication apparatus is a terminal device, and the second communication apparatus is an RSU.

For example, as shown in FIG. 3, the first communication apparatus is the terminal device 301, and the second communication apparatus is the RSU 302.

In a sidelink communication system, communication transmission may be performed between terminal devices based on a sidelink. A positioning reference signal may be transmitted between different terminal devices, to implement sidelink positioning between the terminal devices.

A minimum scheduling resource in the sidelink communication system is a subchannel. To be specific, a segment of spectrum resources (including one or more subchannels) in a single slot can be allocated to only one user, and cannot be allocated to a plurality of users. Therefore, a terminal device can reserve only one or several specific subchannels, and transmit a positioning reference signal by using the reserved subchannels. It can be learned that, in the foregoing technical solution, flexibility of reserving a resource by the terminal device is poor.

This application provides a corresponding technical solution, to enable a first communication apparatus to flexibly reserve a positioning reference signal resource, and implement sidelink positioning between the first communication apparatus and a second communication apparatus.

Further, sidelink positioning accuracy is usually strongly related to sending bandwidth of a positioning reference signal. For example, the positioning accuracy depends on accuracy of a measurement quantity, for example, arrival time. Accuracy of the arrival time is related to signal bandwidth. Larger signal bandwidth indicates higher accuracy of the arrival time and a smaller error.

Therefore, to ensure the positioning accuracy, the sending bandwidth of the positioning reference signal needs to be increased as much as possible. For example, the terminal device occupies whole bandwidth (that is, all subchannels of the resource pool) in the resource pool, and sends the positioning reference signal based on the full bandwidth, thereby improving positioning accuracy. If all subchannels in one slot are allocated to a single user, a user capacity is limited. When there are a large quantity of users in the sidelink communication system, a problem of an insufficient system capacity occurs, and consequently, positioning requirements of some users cannot be met. On the other hand, to meet positioning requirements of a plurality of users in a same slot, each user needs to occupy different subchannels. Consequently, sending bandwidth of a positioning reference signal of each user is limited, and positioning accuracy is low. Therefore, how to improve a system capacity and positioning accuracy is a problem to be resolved in this application.

The technical solutions of this application are described below with reference to specific embodiments.

FIG. 6 is a diagram of an embodiment of a resource indication method according to an embodiment of this application. Refer to FIG. 6. The method includes the following steps.

601: A first communication apparatus determines SCI, where the SCI indicates or is for reserving (reserve) M positioning reference signal resources.

The M positioning reference signal resources correspond to N time units. Each time unit corresponds to at least one positioning reference signal resource. Both M and N are integers greater than or equal to 1. That is, M is greater than or equal to N.

Specifically, the first communication apparatus reserves the M positioning reference signal resources based on the SCI.

Optionally, the N time units are indicated or reserved by the first communication apparatus.

Optionally, the time unit may be a plurality of slots, one slot, a half slot, or some time domain symbols in one slot. The following mainly describes the technical solutions of this application by using an example in which the time unit is one slot.

For example, as shown in FIG. 8, the first communication apparatus determines SCI 1, and the N time units include a slot 1, a slot 12, and a slot 15. To be specific, the first communication apparatus sends a positioning reference signal on the M positioning reference signal resources corresponding to the slot 1, the slot 12, and the slot 15.

The M positioning reference signal resources are a part or all of P preconfigured positioning reference signal resources. P is an integer greater than or equal to 1.

Specifically, the P preconfigured positioning reference signal resources are preconfigured in a sidelink communication system. The first communication apparatus may select the M positioning reference signal resources from the P preconfigured positioning reference signal resources.

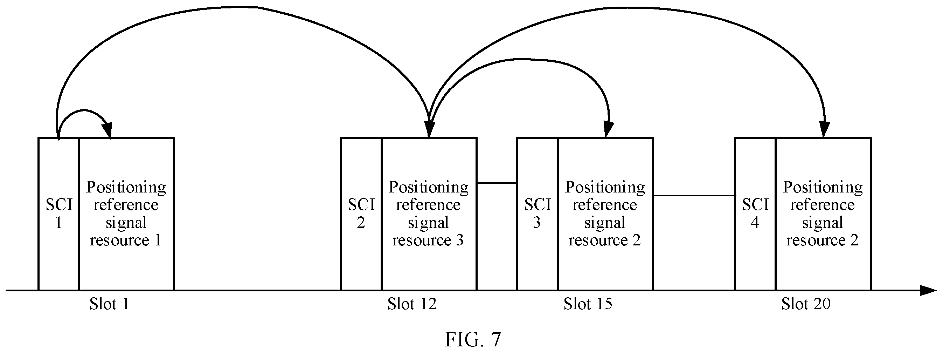

For example, as shown in FIG. 8, the N time units include the slot 1, the slot 12, and the slot 15. The P preconfigured positioning reference signal resources include a positioning reference signal resource 1, a positioning reference signal resource 2, a positioning reference signal resource 3, and a positioning reference signal resource 4. As shown in FIG. 7, the first communication apparatus indicates or reserves, based on the SCI 1, that the first communication apparatus is to send a positioning reference signal on the positioning reference signal resource 1 in the slot 1, the positioning reference signal resource 3 in the slot 12, and the positioning reference signal resource 2 in the slot 15.

For example, as shown in FIG. 8, the N time units include the slot 1, the slot 12, and the slot 15. The P preconfigured positioning reference signal resources include a positioning reference signal resource 1, a positioning reference signal resource 2, a positioning reference signal resource 3, and a positioning reference signal resource 4. The first communication apparatus may indicate or reserve, based on the SCI, that the first communication apparatus is to send a positioning reference signal on the positioning reference signal resource 1 in the slot 1, the positioning reference signal resource 2 in the slot 1, the positioning reference signal resource 3 in the slot 12, and the positioning reference signal resource 2 in the slot 15. In other words, the first communication apparatus may indicate or reserve a plurality of positioning reference signal resources in each time unit.

The sidelink communication system may configure a positioning reference signal resource in a preconfiguration manner, so that the sidelink communication system preconfigures, based on an actual requirement, a positioning reference signal resource that can be reserved, thereby improving flexibility of reserving the positioning reference signal resource by the first communication apparatus. Further, the first communication apparatus selects a positioning reference signal resource from the P preconfigured positioning reference signal resources, and indicates or reserves the M positioning reference signal resources. This helps reduce complexity of reserving a resource by the first communication apparatus.

Optionally, frequency bands occupied by different positioning reference signal resources in the P preconfigured positioning reference signal resources have an overlapping part. Each positioning reference signal occupies specific bandwidth, and a frequency range corresponding to the bandwidth may be referred to as a frequency band occupied by the positioning reference signal resource.

For example, as shown in FIG. 8, the P preconfigured positioning reference signal resources include a positioning reference signal resource 1, a positioning reference signal resource 2, a positioning reference signal resource 3, and a positioning reference signal resource 4. The four positioning reference signal resources occupy a same frequency band.

Optionally, each positioning reference signal resource in the P preconfigured positioning reference signal resources occupies a part or all of bandwidth of a resource pool.

For example, as shown in FIG. 8, the P preconfigured positioning reference signal resources include a positioning reference signal resource 1, a positioning reference signal resource 2, a positioning reference signal resource 3, and a positioning reference signal resource 4. Each positioning reference signal resource may occupy the whole bandwidth of the resource pool in frequency domain.

It can be learned that, as shown in FIG. 8, one slot corresponds to the four positioning reference signal resources. Each positioning reference signal resource may be allocated to one user, and different users may occupy different positioning reference signal resources. Therefore, a plurality of users can send positioning reference signal resources in one slot, and bandwidth for sending a positioning reference signal by each user is the bandwidth of the resource pool. In this way, resources can be reused by a plurality of users, thereby improving a system capacity. Positioning accuracy of a user is ensured while ensuring multi-user multiplexing.

The following describes two possible configuration manners of the P preconfigured positioning reference signal resources.

Manner 1: The N time units include the P preconfigured positioning reference signal resources.

In the manner 1, the sidelink communication system preconfigures a positioning reference signal resource by using a time unit as a granularity. In other words, each time unit includes at least one preconfigured positioning reference signal resource. A quantity of preconfigured positioning reference signal resources included in each of the N time units may be the same or may be different. This is not specifically limited in this application. The N time units include a total of P preconfigured positioning reference signal resources.

For example, as shown in FIG. 8, the N time units are N slots. The positioning reference signal resource 1 to the positioning reference signal resource 4 are four preconfigured positioning reference signal resources included in one of the N slots. If a quantity of preconfigured positioning reference signal resources included in each slot is the same, P is equal to 4 multiplied by N.

Optionally, configurations of preconfigured positioning reference signal resources included in different time units in the N time units may be the same or may be different. This is not specifically limited in this application. In a same time unit, different preconfigured positioning reference signal resources have different configurations.

For the configuration of the positioning reference signal resource, refer to related descriptions of the foregoing technical terms. A terminal device may determine a specific location of each preconfigured positioning reference signal resource in each time unit based on a configuration of the preconfigured positioning reference signal resource included in each time unit. For example, as shown in FIG. 8, the slot 1 includes the preconfigured positioning reference signal resource 1 to the preconfigured positioning reference signal resource 4. The terminal device may determine a specific location of the positioning reference signal resource 1 in the slot 1 based on a configuration of the positioning reference signal resource 1.

For example, the N time units are N slots, and each of the N slots includes the preconfigured positioning reference signal resource 1, positioning reference signal resource 2, positioning reference signal resource 3, and positioning reference signal resource 4 shown in FIG. 8. In other words, configurations of preconfigured positioning reference signal resources included in different slots are the same.

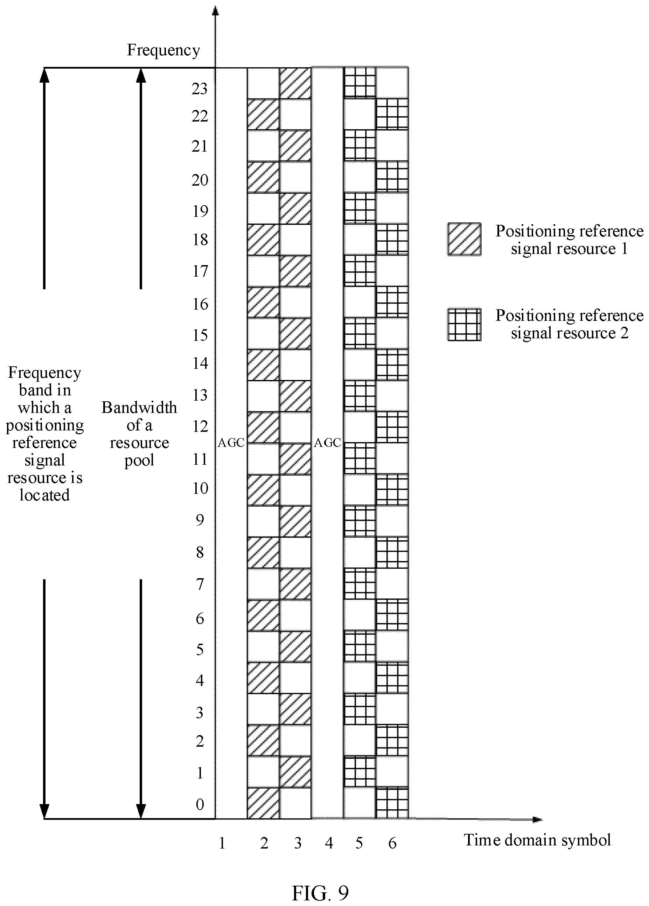

For example, the N time units are N slots, and the N slots include a slot 1 and a slot 12. The slot 1 includes the positioning reference signal resource 1 to the positioning reference signal resource 4 shown in FIG. 8. The slot 2 includes a positioning reference signal resource 1 and a positioning reference signal resource 2 shown in FIG. 9. In other words, configurations of preconfigured positioning reference signal resources included in different slots may be different.

Manner 2: A resource pool in which the N time units are located includes the P preconfigured positioning reference signal resources.

In the manner 2, the sidelink communication system preconfigures a positioning reference signal resource by using a resource pool as a granularity. The N time units may be located in one or more resource pools, and each of the one or more resource pools includes at least one preconfigured positioning reference signal. The one or more resource pools include a total of P preconfigured positioning reference signal resources.

It should be noted that, it can be learned from the foregoing related explanations about the resource pool that each resource pool includes a corresponding time-frequency resource. Therefore, the resource pool in which the N time units are located is a resource pool to which the N time units belong. For example, the N time units include a time unit 1 and a time unit 2. Both the time unit 1 and the time unit 2 are time domain resources in a first resource pool. Therefore, the time unit 1 and the time unit 2 are located in the first resource pool. For example, the N time units are located in one resource pool. As shown in FIG. 8, the resource pool includes the preconfigured positioning reference signal resource 1, positioning reference signal resource 2, positioning reference signal resource 3, and positioning reference signal resource 4. Therefore, P is equal to 4. The first communication apparatus may select, for each time unit from the four positioning reference signal resources, at least one positioning reference signal resource corresponding to each time unit. Then, the first communication apparatus sends the SCI to the second communication apparatus. The SCI indicates or is for reserving the at least one positioning reference signal resource. The at least one positioning reference signal resource is used by the first communication apparatus to send a positioning reference signal in the time unit. For example, the N time units are N slots, and the N slots include a slot 1, a slot 12, and a slot 15. The at least one positioning reference signal resource includes a positioning reference signal resource 1 in the slot 1, a positioning reference signal resource 3 in the slot 12, and a positioning reference signal resource 2 in the slot 15. In other words, the first communication apparatus reserves one positioning reference signal resource in each slot.

Optionally, the N time units belong to a same resource pool. In the resource pool to which the N time units belong, different preconfigured positioning reference signal resources have different configurations.

For the configuration of the positioning reference signal resource, refer to related descriptions of the foregoing technical terms.

For example, the N time units are N slots, and the N slots include a slot 1, a slot 12, and a slot 15. The slot 1, the slot 12, and the slot 15 are located in a resource pool 1. The resource pool 1 includes the positioning reference signal resource 1 to the positioning reference signal resource 4 shown in FIG. 8. It can be learned from FIG. 8 that, in the resource pool 1, different positioning reference signal resources have different configurations.

Optionally, the N time units are located in a plurality of resource pools, and a quantity of preconfigured positioning reference signal resources included in each of the plurality of resource pools is the same or different. This is not specifically limited in this application. If each resource pool includes Q preconfigured positioning reference signal resources, P is equal to Q multiplied by N. Q is an integer greater than or equal to 1.

Optionally, the N time units are located in a plurality of resource pools, and configurations of preconfigured positioning reference signal resources included in different resource pools in the plurality of resource pools may be the same or may be different. This is not specifically limited in this application.

The following describes some possible implementations of the P preconfigured positioning reference signal resources based on the foregoing manner 1 (that is, the N time units include the P preconfigured positioning reference signal resources).

Implementation 1: When the N time units include the P preconfigured positioning reference signal resources, different positioning reference signal resources in preconfigured positioning reference signal resources included in each time unit meet a frequency division multiplexing relationship on a same time domain resource.

For example, as shown in FIG. 8, the N time units are N slots, and one of the N slots includes a positioning reference signal resource 1, a positioning reference signal resource 2, a positioning reference signal resource 3, and a positioning reference signal resource 4. The N slots belong to a same resource pool. Each positioning reference signal resource occupies the whole bandwidth of the resource pool, that is, bandwidth of the resource pool shown in FIG. 8. Different positioning reference signal resources occupy different sub-carriers on a same time domain symbol, but each positioning reference signal resource occupies the whole bandwidth of the resource pool in frequency domain. As shown in FIG. 8, all the four positioning reference signal resources occupy a time domain symbol 1 to a time domain symbol 6, and the positioning reference signal resource 1, the positioning reference signal resource 2, the positioning reference signal resource 3, and the positioning reference signal resource 4 meet a frequency division multiplexing relationship on any one of the time domain symbol 1 to the time domain symbol 6. For example, the positioning reference signal resource 1 occupies a sub-carrier 0, a sub-carrier 4, and a sub-carrier 8 on the time domain symbol 1, the positioning reference signal resource 2 occupies a sub-carrier 1, a sub-carrier 5, and a sub-carrier 9 on the time domain symbol 1, the positioning reference signal resource 3 occupies a sub-carrier 2, a sub-carrier 6, and a sub-carrier 10 on the time domain symbol 1, and the positioning reference signal resource 4 occupies a sub-carrier 3, a sub-carrier 7, and a sub-carrier 11 on the time domain symbol 1. Different positioning reference signal resources occupy different sub-carriers on a same time domain symbol. In this way, each positioning reference signal resource occupies the whole bandwidth of the resource pool, and different positioning reference signal resources meet the frequency division multiplexing relationship on a same time domain resource.

In this implementation, multi-user multiplexing may be implemented between different positioning reference signal resources in a frequency division manner. For example, a user 1 uses a positioning reference signal resource 1 and a positioning reference signal resource 2, and a user 2 uses a positioning reference signal resource 3, so that a plurality of users can send positioning reference signals in one slot, and sending bandwidth of a positioning reference signal of each user is the bandwidth of the resource pool. In this implementation, the terminal device may reserve a resource at a granularity of a reference signal resource instead of a granularity of a non-subchannel, thereby improving positioning accuracy and ensuring a multi-user capacity.

Implementation 2: When the N time units include the P preconfigured positioning reference signal resources, different positioning reference signal resources in preconfigured positioning reference signal resources included in each time unit meet a time division multiplexing relationship on a same frequency domain resource.

For example, as shown in FIG. 9, the N time units are N slots, and one of the N slots includes a positioning reference signal resource 1 and a positioning reference signal resource 2. Each positioning reference signal resource occupies the whole bandwidth of the resource pool, that is, bandwidth of the resource pool shown in FIG. 9. The positioning reference signal resource 1 and the positioning reference signal resource 2 occupy different time domain symbols. As shown in FIG. 9, the positioning reference signal resource 1 occupies a time domain symbol 2 and a time domain symbol 3, and the positioning reference signal resource 2 occupies a time domain symbol 5 and a time domain symbol 6. A sub-carrier occupied by the positioning reference signal resource 1 on one time domain symbol may be the same as or different from a sub-carrier occupied by the positioning reference signal resource 2 on one time domain symbol. However, the positioning reference signal resource 1 and the positioning reference signal resource 2 occupy the whole bandwidth of the resource pool in frequency domain. For example, a sub-carrier occupied by the positioning reference signal resource 1 on the time domain symbol 2 is the same as a sub-carrier occupied by the positioning reference signal resource 2 on the time domain symbol 6. In this way, each positioning reference signal resource occupies the whole bandwidth of the resource pool, and different positioning reference signal resources meet the time division multiplexing relationship on a same frequency domain resource.

In this implementation, multi-user multiplexing may be implemented between different positioning reference signal resources in a time division manner. To be specific, a plurality of time domain symbols in one slot are divided into a plurality of groups of time domain symbols, and each group of time domain symbols corresponds to one positioning reference signal resource. Different users send positioning reference signals on different groups of time domain symbols, so that a plurality of users send positioning reference signals in a same slot. Sending bandwidth of a positioning reference signal of each user may be the bandwidth of the resource pool. In this way, a system capacity is increased and positioning accuracy is improved.

For example, the user 1 sends a positioning reference signal on the positioning reference signal resource 1 in the slot shown in FIG. 9. The user 2 sends a positioning reference signal on the positioning reference signal resource 2 in the slot shown in FIG. 9. This helps avoid a frequency offset error introduced by movement of the user 1 and the user 2 at a high speed, and avoid mutual interference between signals of the two users, thereby improving positioning accuracy.

Implementation 3: When the N time units include the P preconfigured positioning reference signal resources, in preconfigured positioning reference signal resources included in each time unit, positioning reference signal resources occupying a same time domain resource meet a frequency division multiplexing relationship on a same time domain resource, and positioning reference signal resources occupying a same frequency domain resource meet a time division multiplexing relationship on a same frequency domain resource.

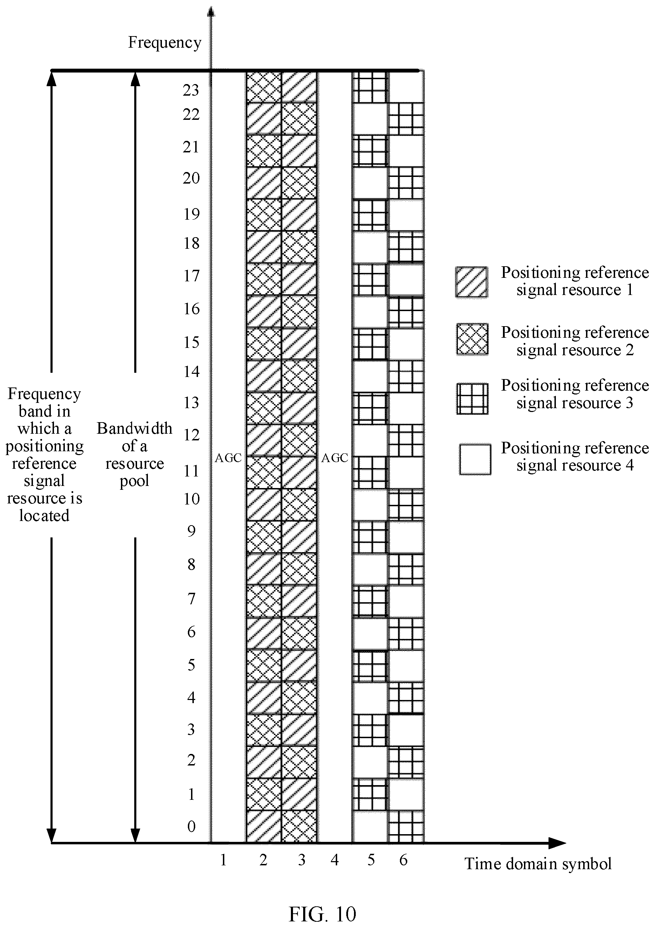

For example, as shown in FIG. 10, the N time units are N slots, and one of the N slots includes a positioning reference signal resource 1, a positioning reference signal resource 2, a positioning reference signal resource 3, and a positioning reference signal resource 4. Each positioning reference signal resource occupies the whole bandwidth of the resource pool, that is, bandwidth of the resource pool shown in FIG. 9. Both the positioning reference signal resource 1 and the positioning reference signal resource 2 occupy a time domain symbol 1 and a time domain symbol 2. The positioning reference signal resource 1 and the positioning reference signal resource 2 meet a frequency division multiplexing relationship on the time domain symbol 1. The positioning reference signal resource 1 and the positioning reference signal resource 2 meet a frequency division multiplexing relationship on the time domain symbol 2. Both the positioning reference signal resource 3 and the positioning reference signal resource 4 occupy a time domain symbol 5 and a time domain symbol 6. The positioning reference signal resource 3 and the positioning reference signal resource 4 meet a frequency division multiplexing relationship on the time domain symbol 5. The positioning reference signal resource 3 and the positioning reference signal resource 4 meet a frequency division multiplexing relationship on the time domain symbol 6.

In this implementation, each positioning reference signal resource occupies the whole bandwidth of the resource pool. Multi-user multiplexing is implemented between the positioning reference signal resource 1 and the positioning reference signal resource 2 in a frequency division manner. Multi-user multiplexing may be implemented between the positioning reference signal resource 3 and the positioning reference signal resource in a time division manner. This helps improve resource utilization. Sending bandwidth of a positioning reference signal of each user may be the bandwidth of the resource pool. In this way, a system capacity is increased and positioning accuracy is improved.

It should be noted that the foregoing example is described by using an example in which each positioning reference signal resource occupies the whole bandwidth of the resource pool. In actual application, bandwidth occupied by each positioning reference signal resource may be configured by an access network device, or may be preconfigured, and does not necessarily occupy the whole bandwidth of the resource pool.

The following describes some possible implementations of the P preconfigured positioning reference signal resources based on the foregoing manner 2 (that is, the resource pool in which the N time units are located includes the P preconfigured positioning reference signal resources).

Implementation 1: When the resource pool in which the N time units are located includes the P preconfigured positioning reference signal resources, different positioning reference signal resources in preconfigured positioning reference signal resources included in a resource pool in which each of the N time units is located meet a frequency division multiplexing relationship on a same time domain resource. Each positioning reference signal resource occupies the whole bandwidth of the resource pool.

Implementation 2: When the resource pool in which the N time units are located includes the P preconfigured positioning reference signal resources, different positioning reference signal resources in preconfigured positioning reference signal resources included in a resource pool in which each of the N time units is located meet a time division multiplexing relationship on a same frequency domain resource. Each positioning reference signal resource occupies the whole bandwidth of the resource pool.

Implementation 3: When the resource pool in which the N time units are located includes the P preconfigured positioning reference signal resources, in preconfigured positioning reference signal resources included in a resource pool in which each of the N time units is located, positioning reference signal resources occupying a same time domain resource meet a frequency division multiplexing relationship on a same time domain resource, and positioning reference signal resources occupying a same frequency domain resource meet a time division multiplexing relationship on a same frequency domain resource. Each positioning reference signal resource occupies the whole bandwidth of the resource pool.

The implementation 1 to the implementation 3 are similar to the implementation 1 to the implementation 3 corresponding to the foregoing manner in which the N time units include the P preconfigured positioning reference signal resources. For details, refer to the foregoing related descriptions.

Optionally, the SCI includes a first field, and the first field indicates or is for reserving the M positioning reference signal resources.

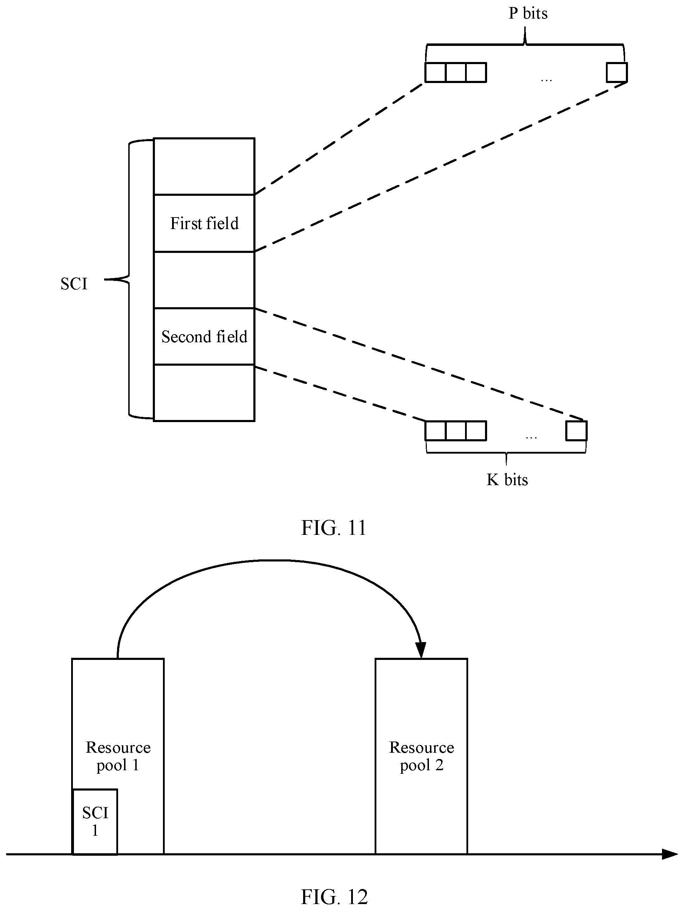

For example, as shown in FIG. 11, the SCI includes a first field, and the first communication apparatus may indicate or reserve the M positioning reference signal resources based on a value of the first field. For example, the first field indicates indexes of the M positioning reference signal resources or identifiers of the M positioning reference signal resources.

Optionally, a length of the first field is determined based on a maximum quantity of time units that can be indicated or reserved by the SCI or a maximum quantity of positioning reference signals that can be indicated or reserved by the SCI.

The following describes the length of the first field with reference to a configuration manner of the P preconfigured positioning reference signal resources.

1. When the N time units include the P preconfigured positioning reference signal resources, each time unit includes a same quantity of preconfigured positioning reference signal resources. The length of the first field is determined based on the maximum quantity of time units that can be indicated or reserved by the SCI and the quantity of preconfigured positioning reference signal resources included in each time unit; or the length of the first field is determined based on the maximum quantity of positioning reference signal resources that can be indicated or reserved by the SCI and the quantity of preconfigured positioning reference signal resources included in each time unit.

In this implementation, optionally, the length of the first field meets a condition: $\left\lceil \log_2 N_{slprs}^{K_{reserve}} \right\rceil$,

or $\left\lceil \log_2 N_{slprs}^{K_{reserve}} \right\rceil + X$. $\left\lceil \log_2 N_{slprs}^{K_{reserve}} \right\rceil$ represents rounding on $\log_2 N_{slprs}^{K_{reserve}}$, and $\log_2 N_{slprs}^{K_{reserve}}$ represents calculating the logarithm of $N_{slprs}^{K_{reserve}}$ with a base 2. $N_{slprs}$ represents a quantity of preconfigured positioning reference signal resources included in each time unit. $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X may be equal to -1, -2, -3, 0, 1, 2, 3, or the like.

For example, as shown in FIG. 11, when a maximum quantity $K_{reserve}$ of slots that can be indicated or reserved by the SCI is 3, each slot includes four preconfigured positioning reference signal resources, that is, $N_{slprs}$ is equal to 4. In this case, there are 64 possible choices in total. Therefore, the length S of the first field may be 6 bits.

For example, as shown in FIG. 11, when a maximum quantity $K_{reserve}$ of slots that can be indicated or reserved by the SCI is 3, each slot includes two preconfigured positioning reference signals, that is, $N_{slprs}$ is equal to 2. In this case, there are 8 possible choices in total. Therefore, the length S of the first field may be 3 bits.

In this implementation, optionally, the length of the first field meets the following condition:

$$\left\lceil log_2 \left[ \left(N_{slprs}\right)^{k_{reserve}-k_0} + k_1 \right] \right\rceil.$$

$N_{slprs}$ represents a quantity of preconfigured positioning reference signal resources included in each time unit. $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ may be an integer greater than or equal to 1. For example, $k_0$ is a constant, that is, a fixed value. It can be learned that $k_0$ may be an integer greater than or equal to 1, and indicates that the SCI indicates indexes of positioning reference signal resources in only some time units (for example, some slots). $k_1$ is an integer greater than or equal to 0, or $k_1$ is determined based on a system coefficient. For example, $k_1=k_0$, $k_1=k_{reserve}$, or $k_1 = N_{slprs}$.

Alternatively,

the length of the first field meets the following condition:

$$\left\lceil log_2 \left[ \left(N_{slprs}\right)^{k_{reserve}-k_0} + \left(N_{slprs}\right)^{k_{reserve}-k_0-1} + \cdots \left(N_{slprs}\right)^0 + a \right] \right\rceil.$$

$N_{slprs}$ represents a quantity of preconfigured positioning reference signal resources included in each time unit. $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ may be an integer greater than or equal to 1. For example, $k_0$ is a constant, that is, a fixed value. It can be learned that $k_0$ may be an integer greater than or equal to 1, and indicates that the SCI indicates indexes of positioning reference signal resources in only some time units (for example, some slots). In a possible implementation, $a=0$, or $a=1$. In another possible implementation, $a=k_0$, $a = k_{reserve}$, or $a = N_{slprs}$.

Alternatively,
the length of the first field meets a condition: The length of the first field is 4W bits. W is an integer greater than or equal to 1.
For example, the length of the first field is 4 bits, 8 bits, or 12 bits. When the SCI can indicate a positioning reference signal resource in only one time unit (for example, a future slot), the length of the first field is 4 bits. When the SCI can indicate or be for reserving positioning reference signal resources in two time units (for example, two future slots), the length of the first field is 8 bits. When the SCI can indicate or be for reserving positioning reference signal resources in three time units (for example, three future slots), the length of the first field is 12 bits.
For example, as shown in Table 1, the length of the first field is 8 bits. The 4 most significant bits (that is, most significant bit (most significant bit, MSB)) in the first field indicate one positioning reference signal resource (that is, the 1st positioning reference signal resource), and the 4 least significant bits (that is, least significant bit (least significant bit, LSB)) in the first field indicate another positioning reference signal resource (that is, the 2nd positioning reference signal resource). Alternatively, when the SCI can indicate or be for reserving only one positioning reference signal resource, the length of the first field is 4 bits. When the SCI can indicate or be for reserving two positioning reference signal resources, the length of the first field is 8 bits. The 4 most significant bits in the first field indicate the 1st positioning reference signal resource, and the 4 least significant bits in the first field indicate the 2nd positioning reference signal resource.

Table 1

| Bit 1 | Bit 2 | Bit 3 | Bit 4 | Bit 5 | Bit 6 | Bit 7 | Bit 8 |
|---|---|---|---|---|---|---|---|
| 1st positioning reference signal resource | | | | 2nd positioning reference signal resource | | | |

Alternatively, the length of the first field is 8 bits, the 4 least significant bits in the first field indicate a positioning reference signal resource in the 1st time unit in the two time units, and the 4 most significant bits in the first field indicate a positioning reference signal resource in the 2nd time unit in the two time units.
For another example, as shown in Table 2, the length of the first field is 12 bits. The 4 most significant bits (that is, bits 1 to 4) in the first field indicate the 1st positioning reference signal resource, the 4 middle bits (that is, bits 5 to 8) in the first field indicate the 2nd positioning reference signal resource, and the 4 least significant bits (that is, bits 9 to 12) in the first field indicate the 3rd positioning reference signal resource.

Table 2

| Bit 1 | Bit 2 | Bit 3 | Bit 4 | Bit 5 | Bit 6 | Bit 7 | Bit 8 | Bit 9 | Bit 10 | Bit 11 | Bit 12 |
|---|---|---|---|---|---|---|---|---|---|---|---|
| 1st positioning reference signal resource | | | | 2nd positioning reference signal resource | | | | 3rd positioning reference signal resource | | | |

The following describes two possible implementations of the value of the first field. This application is also applicable to another implementation. This is not specifically limited in this application.

Implementation 1: The value of the first field meets the following condition: $I_1 + I_2 \times N_{slprs} + \cdots I_N \times (N_{slprs})^{N-1}$, or $I_1 + I_2 \times N_{slprs} + \cdots I_N \times (N_{slprs})^{N-1} + Y$.

$I_1$ represents an index of a positioning reference signal resource in the 1st time unit in the N time units indicated or reserved by the SCI. $I_2$ represents an index of a positioning reference signal resource in the 2nd time unit in the N time units indicated or reserved by the SCI. $I_N$ is an index of a positioning reference signal resource in the Nth time unit in the N time units indicated or reserved by the SCI. $N_{slprs}$ represents a quantity of preconfigured positioning reference signal resources included in each time unit. Indexes of the preconfigured positioning reference signal resources included in each of the N time units are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

For example, if N is equal to 1, the value of the first field is $I_1$. If N is equal to 2, the value of the first field is $I_1 + I_2 \times N_{slprs}$. If N is equal to 3, the value of the first field is $I_1 + I_2 \times N_{slprs} + I_3 \times (N_{slprs})^2$.

For example, the N time units are N slots, and the N slots are a slot 1, a slot 12, and a slot 15. That is, N is equal to 3. Each slot includes four preconfigured positioning reference signal resources, and corresponding indexes are 0, 1, 2, and 3. The value of the first field is 63. It can be learned from the condition that the value of the first field meets that $I_1$=3, $I_2$=3, and $I_3$=3. Therefore, it can be learned that the SCI indicates or is for reserving a positioning reference signal resource whose index is 3 in the slot 1, a positioning reference signal resource whose index is 3 in the slot 12, and a positioning reference signal resource whose index is 3 in the slot 15. It can be learned that each slot includes four preconfigured positioning reference signal resources, where $I_1$ changes at a granularity of 1, $I_2$ changes at a granularity of 4, and $I_3$ changes at a granularity of 16.

Implementation 2: The value of the first field meets the following condition: $I_1 + I_2 \times N_{slprs} + \cdots I_N \times (N_{slprs})^{N-1} - 1$, or $I_1 + I_2 \times N_{slprs} + \cdots I_N \times (N_{slprs})^{N-1} - 1 + Y$.

$I_1$ represents an index of a positioning reference signal resource in the 1st time unit in the N time units indicated or reserved by the SCI. $I_2$ represents an index of a positioning reference signal resource in the 2nd time unit in the N time units indicated or reserved by the SCI. $I_N$ is an index of a positioning reference signal resource in the Nth time unit in the N time units indicated or reserved by the SCI. $N_{slprs}$ represents a quantity of preconfigured positioning reference signal resources included in each time unit. Indexes of the preconfigured positioning reference signal resources included in each of the N time units are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

The implementation 2 is similar to the implementation 1. For details, refer to related descriptions of the foregoing implementation 1.

2. When the resource pool in which the N time units are located includes the P preconfigured positioning reference signal resources, the N time units belong to a same resource pool. The length of the first field is determined based on the maximum quantity of time units that can be indicated or reserved by the SCI and a quantity of preconfigured positioning reference signal resources included in the resource pool; or the length of the first field is determined based on the maximum quantity of positioning reference signal resources that can be indicated or reserved by the SCI and a quantity of preconfigured positioning reference signal resources included in the resource pool.

In this implementation, the length of the first field meets the following condition: $\left\lceil \log_2 Q^{K_{reserve}} \right\rceil$ or

$\left\lceil \log_2 Q^{K_{reserve}} \right\rceil + X$. $\left\lceil \log_2 Q^{K_{reserve}} \right\rceil$ represents rounding on $\log_2 Q^{K_{reserve}}$, and $\log_2 Q^{K_{reserve}}$ represents calculating the logarithm of $Q^{K_{reserve}}$ with a base 2. Q represents the quantity of preconfigured positioning reference signal resources included in the resource pool, and $K_{resere}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X is equal to -1, -2, -3, 0, 1, 2, 3, or the like.

For example, as shown in FIG. 11, when a maximum quantity $K_{reserve}$ of positioning reference signal resources that can be indicated or reserved by the SCI is 2, the resource pool includes four preconfigured positioning reference signal resources, that is, $N_{slprs}$ is equal to 4. In this case, there are 16 possible choices in total. Therefore, the length S of the first field may be 4 bits.

For example, as shown in FIG. 11, when a maximum quantity $K_{resere}$ of slots that can be indicated or reserved by the SCI is 3, the resource pool includes two preconfigured positioning reference signals, that is, $N_{slprs}$ is equal to 2. In this case, there are 8 possible choices in total. Therefore, the length S of the first field may be 3 bits.

In this implementation, optionally, the length of the first field meets the following condition:

$$\lceil log_2[(Q)^{k_{reserve}-k_0} + k_1]\rceil.$$

Q represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ may be an integer greater than or equal to 1. For example, $k_0$ is a constant, that is, a fixed value. It can be learned that $k_0$ may be an integer greater than or equal to 1, and indicates that the SCI indicates indexes of positioning reference signal resources in only some time units (for example, some slots). $k_1$ is an integer greater than or equal to 0, or $k_1$ is determined based on a system coefficient. For example, $k_1=k_0$, $k_1=k_{reserve}$, or $k_1 = Q$.

Alternatively,

optionally, the length of the first field meets the following condition:

$$\lceil log_2[(Q)^{k_{reserve}-k_0} + (Q)^{k_{reserve}-k_0-1} + \cdots (Q)^0 + a]\rceil.$$

Q represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1, for example, $k_0$ is a constant, that is, a fixed value. a is an integer greater than or equal to 0. In a possible implementation, $a=0$, or $a=1$. In another possible implementation, $a=k_0$, $a = k_{reserve}$, or $a = Q$.

Alternatively,

the length of the first field meets a condition: The length of the first field is 4W bits. W is an integer greater than or equal to 1.

For example, the length of the first field is 4 bits, 8 bits, or 12 bits. When the SCI can indicate a positioning reference signal resource in only one time unit (for example, a future slot), the length of the first field is 4 bits. When the SCI can indicate or be for reserving positioning reference signal resources in two time units (for example, two future slots), the length of the first field is 8 bits. When the SCI can indicate or be for reserving positioning reference signal resources in three time units (for example, three future slots), the length of the first field is 12 bits.

For example, as shown in Table 1, the length of the first field is 8 bits. The 4 most significant bits (that is, MSB) in the first field indicate one positioning reference signal resource (that is, the 1st positioning reference signal resource), and the 4 least significant bits (that is, LSB) in the first field indicate another positioning reference signal resource (that is, the 2nd positioning reference signal resource). Alternatively, when the SCI can indicate or be for reserving only one positioning reference signal resource, the length of the first field is 4 bits. When the SCI can indicate or be for reserving two positioning reference signal resources, the length of the first field is 8 bits. The 4 most significant bits in the first field indicate the 1st positioning reference signal resource, and the 4 least significant bits in the first field indicate the 2nd positioning reference signal resource. Alternatively, the length of the first field is 8 bits, the 4 least significant bits in the first field indicate a positioning reference signal resource in the 1st time unit in the two time units, and the 4 most significant bits in the first field indicate a positioning reference signal resource in the 2nd time unit in the two time units.

For another example, the length of the first field is 12 bits. A manner of indicating the positioning reference signal resource by the first field is shown in Table 2.

In another possible implementation, $k_{reserve}$ is indicated by RRC signaling. For example, in a possible implementation, $k_{reserve}$ is indicated by using an information element in configuration signaling related to a sidelink resource pool in the RRC signaling. For example, $k_{reserve}$ is indicated by using a maximum sidelink reserved (sl-MaxNumPerReserve) information element in configuration signaling related to a sidelink resource pool in the RRC signaling.

In another possible implementation, a calculation formula of the length of the first field may indicate that the length of the first field is related to a maximum quantity of resources or a maximum quantity of time units that can be indicated in each time of sidelink control signaling transmission.

In another possible implementation, the calculation formula of the length of the first field may indicate that only $k_{reserve}$ - $k_0$ positioning reference signal resources need to be indicated in the $k_{reserve}$ positioning reference signal resources that can be reserved. The other $k_0$ positioning reference signal resources are indicated in another manner. For example, the $k_0$ positioning reference signal resources are indicated by using frequency domain location information or time domain location information of a PSCCH carrying control signaling (for example, SCI). Optionally, the frequency domain location information includes a start frequency or bandwidth. The start frequency includes a start RB, a start subchannel, any other frequency-related information, or the like. The bandwidth includes a bandwidth size, for example, a quantity of RBs, a quantity of subchannels, or a quantity of REs. The time domain location information includes information such as a slot, a start symbol, a subframe, and/or a frame.

The following describes two possible implementations of the value of the first field. This application is also applicable to another implementation. This is not specifically limited in this application.

Implementation 1: The value of the first field meets the following condition: $I_1 + I_2 \times Q + \cdots I_N \times (Q)^{N-1}$, or $I_1 + I_2 \times Q + \dots I_N \times (Q)^{N-1} + Y$.

$I_1$ represents an index of a positioning reference signal resource in the 1st time unit in the N time units indicated or reserved by the SCI. $I_2$ represents an index of a positioning reference signal resource in the 2nd time unit in the N time units indicated or reserved by the SCI. $I_N$ is an index of a positioning reference signal resource in the Nth time unit in the N time units indicated or reserved by the SCI. Q represents a quantity of preconfigured positioning reference signal resources included in the resource pool. Indexes of the preconfigured positioning reference signal resources included in the resource pool are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

Implementation 2: The value of the first field meets the following condition: $I_1 + I_2 \times Q + \cdots I_N \times (Q)^{N-1}$ - 1, or $I_1 + I_2 \times Q + \cdots I_N \times (Q)^{N-1}$ - 1 + Y.

$I_1$ represents an index of a positioning reference signal resource in the 1st time unit in the N time units indicated or reserved by the SCI. $I_2$ represents an index of a positioning reference signal resource in the 2nd time unit in the N time units indicated or reserved by the SCI. $I_N$ is an index of a positioning reference signal resource in the Nth time unit in the N time units indicated or reserved by the SCI. Q represents a quantity of preconfigured positioning reference signal resources included in the resource pool. Indexes of the preconfigured positioning reference signal resources included in the resource pool are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

The implementation 1 and the implementation 2 are similar to the two implementations of the value of the first field corresponding to the foregoing manner in which the N time units include the P preconfigured positioning reference signal resources. For details, refer to the foregoing related descriptions.

It can be learned that the length of the first field is related to the maximum quantity of time units or the maximum quantity of positioning reference signal resources that can be indicated (or reserved) by the SCI and the quantity of preconfigured positioning reference signal resources included in each time unit. Alternatively, the length of the first field is related to the maximum quantity of time units or the maximum quantity of positioning reference signal resources that can be indicated (or reserved) by the SCI and the quantity of preconfigured positioning reference signal resources included in the resource pool to which the N time units belong. Usually, the quantity of preconfigured positioning reference signal resources included in each time unit or the resource pool to which the N time units belong is less than a quantity of subchannels corresponding to current full bandwidth. Therefore, in the technical solution of this application, the length of the first field is short, which helps reduce system overheads generated when the first communication apparatus sends the SCI.

It should be noted that the foregoing shows that the first field is designed in a joint coding manner. In actual application, the first field may alternatively be designed in an independent coding manner. For example, bits corresponding to each time unit are independently designed, and then the first field is formed by using the bits corresponding to each time unit. A bit corresponding to each time unit is a bit indicating a positioning reference signal resource reserved by the terminal device in the time unit.

For example, the N time units belong to a resource pool 1, and the resource pool 1 includes four preconfigured positioning reference signal resources. One positioning reference signal resource is reserved in each of the N time units. Each time unit may occupy four bits of the first field. For example, the N time units are two slots, which are a slot 1 and a slot 3. In this case, the length of the first field is 8 bits, the first four bits indicate a positioning reference signal resource reserved by the terminal device in the slot 1, and the last four bits indicate a positioning reference signal resource reserved by the terminal device in the slot 3. In other words, the bits indicating the positioning reference signal resource reserved in the slot 1 and the bits indicating the positioning reference signal resource reserved in the slot 3 are separately designed, and then the first field is formed by the bits corresponding to each slot.

Optionally, the SCI further indicates or is further for reserving the N time units.

For example, as shown in FIG. 7, the first communication apparatus indicates or reserves the slot 1, the slot 12, and the slot 15 based on the SCI 1.

It should be noted that the first communication apparatus may alternatively indicate or reserve the N time units by using other information. This is not specifically limited in this application.

Optionally, the first field further indicates or is further for reserving the N time units. In other words, the first field indicates or is for reserving the M positioning reference signals and the N time units. In this implementation, the length of the first field is further related to a quantity of reserved time units.

Optionally, bits for indicating or for reserving the N time units and bits indicating or for reserving the M positioning reference signal resources may be used as a whole design of the first field. This manner may be referred to as a joint coding manner. In actual application, the first field may alternatively be designed in an independent coding manner. For example, the bits indicating or for reserving the N time units and the bits indicating or for reserving the M positioning reference signal resources are independently designed, and then the first field is formed by using the two parts of bits.

Optionally, the SCI further includes a second field, and the second field indicates or is for reserving the N time units.

Optionally, a length of the second field is determined based on the maximum quantity of time units that can be indicated or reserved by the SCI or the maximum quantity of positioning reference signal resources that can be indicated or reserved by the SCI.

For example, as shown in FIG. 11, when a maximum quantity of slots that can be indicated or reserved by the SCI is 2, the length of the first field may be 5 bits. When a maximum quantity of slots that can be indicated or reserved by the SCI is 3, the length of the first field may be 9 bits.

For example, the N time units are N slots, and the N slots are a slot 1 and a slot 12. The first field indicates or is for reserving the slot 1 and the slot 12. The first communication apparatus sends the SCI at a time domain start location of the slot 1. Therefore, the first communication apparatus sends a positioning reference signal in the slot 1 by default. Therefore, the slot 1 does not need to be indicated by the first field, but is indirectly indicated by a time domain location in which the first communication apparatus sends the SCI. Usually, the first communication apparatus selects another to-be-indicated or to-be-reserved slot from 32 slots after the slot 1. For example, the first communication apparatus selects the slot 12. Therefore, the length of the first field may be 5 bits, and the 5 bits indicate which slot in the 32 slots is reserved by the first communication apparatus.

For example, the N time units are N slots, and the N slots are a slot 1, a slot 12, and a slot 15. The first field indicates or is for reserving the slot 1, the slot 12, and the slot 15. The first communication device sends the SCI at a time domain start location of the slot 1. Therefore, the first communication apparatus sends a positioning reference signal in the slot 1 by default. Therefore, the slot 1 does not need to be indicated by the first field, but is indirectly indicated by a time domain location in which the first communication apparatus sends the SCI. Usually, the first communication apparatus selects another two to-be-indicated or to-be-reserved slots from 32 slots after the slot 1. For example, the first communication apparatus selects the slot 12 and the slot 15. Therefore, the length of the first field may be 9 bits, and the 9 bits indicate which two slots in the 32 slots are reserved by the first communication apparatus.

It should be noted that, optionally, the first field and/or the second field may be carried in an extended 1st-stage SCI format or 2nd-stage SCI format, or may be carried in a newly designed SCI. A format of the SCI may be a positioning-specific SCI format. For example, the newly designed SCI may also be referred to as sidelink positioning control information (sidelink positioning control information, SPCI).

Optionally, a resource pool to which a time-frequency resource used by the first communication apparatus to send the SCI belongs may be the same as or different from a resource pool to which the M positioning reference signal resources corresponding to the N time units belong.

For example, as shown in FIG. 12, the time-frequency resource used by the first communication apparatus to send SCI belongs to a resource pool 1. The M positioning reference signal resources belong to a resource pool 2. The resource pool 1 and the resource pool 2 may be a same resource pool. For example, the resource pool is a communication resource pool. Alternatively, the resource pool 1 and the resource pool 2 are not a same resource pool, the resource pool 1 is a communication resource pool (communication resource pool), and the resource pool 2 is a positioning resource pool (positioning resource pool).

In this application, the M positioning reference signal resources corresponding to the N time units may belong to a positioning resource pool, and the positioning resource pool is a newly defined resource pool. The SCI belongs to a communication resource pool, that is, a currently defined resource pool. In this way, the first communication apparatus indicates or reserves a positioning reference signal resource across resource pools.

This application further provides the following solutions, which are described below:

In our opinion, to indicate reservation of a positioning reference signal resource in a future slot, the SCI needs to include a field named positioning reference signal resource assignment (SL-PRS resource assignment). The positioning reference signal resource assignment field is similar to a frequency resource assignment (frequency resource assignment) field in a legacy sidelink system. The positioning reference signal resource assignment field may be designed based on the frequency resource assignment field. English descriptions of the foregoing content are: In our opinion, to indicate the reservation of the SL PRS resource within a future slot, a field named SL-PRS resource assignment should be included. This SL-PRS resource assignment field serves similar to the field Frequency resource assignment in legacy sidelink communication system. Hence, the design of the field Frequency resource assignment can be referred to when designing the SL-PRS resource assignment field.

It is considered that $K_{prs}$ positioning reference signal resources are configured in a dedicated positioning reference signal resource pool. Then, there are $K_{prs}$ indication possibilities for each slot. When the maximum quantity of reserved positioning reference signal resources is $M_{reserv}$, there are $(K_{prs})^{M_{reserv}-1}$ indication possibilities. Because a positioning reference signal resource in a slot in which the SCI is located does not need to be indicated by the SCI, the SCI needs to indicate only a reference signal resource in a future slot. Therefore, a length of the reference signal resource assignment field needs to be $\left\lceil \log_2(K_{prs})^{M_{reserv}-1} \right\rceil$. English descriptions of the foregoing content are: Considering that there are $K_{prs}$ SL PRS resources configured within the dedicated SL PRS resource pool, then, for each slot there are $K_{prs}$ indication possibilities. When the maximum reserve number is $M_{reserv}$, there will be $(K_{prs})^{M_{reserv}-1}$ different possibilities considering the first reservation (in the current) should not require any SCI bits to indicate, and the SCI only indicates SL PRS resource within the future slot or slots. Hence, the number of bits of the SL-PRS resource assignment should be

$$\left\lceil \log_2(K_{prs})^{M_{reserv}-1} \right\rceil.$$

In the dedicated resource pool, the SCI needs to include at least a reference signal resource assignment field, and a length of the reference signal resource assignment field needs to be calculated by $\left\lceil \log_2(K_{prs})^{M_{reserv}-1} \right\rceil$. English descriptions corresponding to the foregoing content are: In the dedicated resource pool, the SCI should at least include the field "SL PRS resource assignment". The number of bits of the "SL PRS resource assignment" field should be calculated by

$$\left\lceil \log_2(K_{prs})^{M_{reserv}-1} \right\rceil.$$

Similar to a frequency resource indicator value (frequency resource indicator value, FRIV), a positioning reference signal resource indicator value (PRS resource indicator value, PRIV) may indicate a specific positioning reference signal resource in each slot. If $M_{reserv}=2$, PRIV=$k_{prs,1}$. A positioning reference signal resource in a same slot is indicated by a location of a PSCCH resource, and another positioning reference signal resource is indicated by a PRIV If $M_{reserv}=3$, PRIV=$k_{prs,1} + k_{prs,2} * K_{prs}$. $k_{prs,1}$ represents an index of the 1st reserved positioning reference signal resource, or an index of a positioning reference signal resource in the 1st reserved slot, and $k_{prs,2}$ represents an index of the 2nd reserved positioning reference signal resource, or an index of a positioning reference signal resource in the 2nd reserved slot. The PRIV needs to be used in combination with a time domain resource indicator value (time domain resource indicator value, TRIV). If the TRIV indicates $N < M_{reserv}$, final $M_{reserv}$ minus N positioning reference signal resources are not used, which is similar to an FRIV in a legacy sidelink communication system. N is a quantity of positioning reference signal resources actually indicated by the SCI. Usually, N is 1 or 2. English descriptions of the foregoing content are: Similar to the FRIV, the PRIV (PRS resource indicator value) can be used to determine the specific SL PRS resource within each time slot. If $M_{reserv}$ is 2, $PRIV = k_{prs}$.i.e.SL PRS resource within the same slot is indicated by the position of PSCCH resource, and the other is indicated by the PRIV. If $M_{reserv}$ is 3,$PRIV = k_{prs,1} + k_{prs,2} * K_{prs}$. $k_{prs,1}$ denotes the index of the first reserved SL PRS resource and $k_{prs,2}$ denotes the index of the second reserved SL PRS resource. It is noted that the PRIV should be jointly used with the TRIV. If TRIV indicates $N < M_{reserv}$, the SLPRSresourceto $M_{reserv}$ minus N last resources are not used, which is similar to that of the FRIV in legacy sidelink communications.

The following process of determining a positioning reference signal resource is supported in the dedicated resource pool. If $M_{reserv}=2$, PRIV=$K_{prs}$. A positioning reference signal resource in a same slot is indicated by a location of a PSCCH resource, and another positioning reference signal resource is indicated by a PRIV If $M_{reserv}=3$, PRIV=$k_{prs,1} + k_{prs,2} * K_{prs}$. $M_{reserv}$ is the maximum reserved quantity, and is indicated by higher layer signaling. $k_{prs,1}$ represents an index of the 1st reserved positioning reference signal resource, and $k_{prs,2}$ represents an index of the 2nd reserved positioning reference signal resource. English descriptions corresponding to the foregoing content are: Support the following procedure of determining the SL PRS resources within the dedicated resource pool: If $M_{reserv}$ is 2,PRIV = $k_{prs}$. i.e., SL PRS resource within the same slot is indicated by the position of PSCCH resource, and the other is indicated by the PRIV If $M_{reserv}$ is 3,PRIV = $k_{prs,1} + k_{prs,2} * K_{prs}$. $M_{reserv}$ is the maximum reserve number indicated by high layer signaling,$k_{prs,1}$ denotes the index of the first reserved SL PRS resource and $k_{prs,2}$ denotes the index of the second reserved SL PRS resource.

Optionally, a positioning reference signal resource in a current slot in which the SCI is located may also be indicated by using the SCI. Therefore, when the maximum quantity of reserved positioning reference signal resources is $M_{reserv}$, there are $(K_{prs})^{M_{reserv}}$ indication possibilities, and the SCI needs to indicate only reference signal resources in a plurality of reserved slots including the current slot. Optionally, the length of the reference signal resource assignment field may be

$$\left\lceil \log_2[(K_{prs})^{M_{reserv}-1} + M_{prs}] \right\rceil$$

, where $M_{prs}$: represents a quantity of some or all reference signal resources in the slot in which SCI is located. In other words, in the 1st slot, one reference signal resource needs to be indicated from the $M_{prs}$: reference signals. $M_{prs}$: may be equal to $K_{prs}$, or may be less than $K_{prs}$.

Optionally, a positioning reference signal resource in a current slot in which the SCI is located may also be indicated by using the SCI. Therefore, when the maximum quantity of reserved positioning reference signal resources is $M_{reserv}$, there are $(K_{prs})^{M_{reserv}}$ indication possibilities, and the SCI needs to indicate only reference signal resources in a plurality of reserved slots including the current slot. Optionally, the length of the reference signal resource assignment field may be

$$\left\lceil \log_2 (K_{prs})^{M_{reserv}} \right\rceil$$

.

Optionally, the positioning reference signal resource indicator value (PRS resource indicator value, PRIV), that is, a value of the positioning reference signal resource assignment (SL-PRS resource assignment) field, may indicate a positioning reference signal resource in each slot. Optionally, if $M_{reserv}=2$, PRIV=$K_{prs,1} + k_{prs,2} * K_{prs}$ represents that reference signal resources in two slots are indicated; or PRIV=$K_{prs,1}$ represents that reference signal resources in one slot are indicated. If $M_{reserv}=3$, PRIV=$k_{prs,1} + k_{prs,2} * K_{prs} + k_{prs,3} * (K_{prs})^2$ represents that reference signal resources in three slots are indicated; PRIV=$K_{prs,1}$ represents that reference signal resources in one slot are indicated; or PRIV= $K_{prs,1} + k_{prs,2} * K_{prs}$ represents that reference signal resources in two slots are indicated. $k_{prs,1}$ represents an index of the 1st reserved positioning reference signal resource, or an index of a positioning reference signal resource in the 1st reserved slot. $k_{prs,2}$ represents an index of the 2nd reserved positioning reference signal resource, or an index of a positioning reference signal resource in the 2nd reserved slot. $k_{prs,3}$ represents an index of the 3rd reserved positioning reference signal resource, or an index of a positioning reference signal resource in the 3rd reserved slot.

Optionally, the positioning reference signal resource in the current slot in which the SCI is located may also be indicated by the SCI. Therefore, when the maximum quantity of reserved positioning reference signal resources is $M_{reserv}$, there may be $(K_{prs})^1 + \cdots (K_{prs})^{M_{reserv}-1} + (K_{prs})^{M_{reserv}}$, indicating that a plurality of slots may be independently indicated. For example, there are $K_{prs}$ possibilities when only one slot is indicated, there are $(K_{prs})^2$ possibilities when two slots are indicated, and there are $(K_{prs})^{M_{reserv}}$ possibilities when $M_{reserv}$ slots are indicated. Optionally, the length of the reference signal resource assignment field may be

$$\left\lceil \log_2 (K_{prs})^1 + \cdots (K_{prs})^{M_{reserv}-1} + (K_{prs})^{M_{reserv}} \right\rceil$$

.

Optionally, a positioning reference signal resource in a current slot in which the SCI is located may also be indicated by using the SCI. Therefore, when the maximum quantity of reserved positioning reference signal resources is $M_{reserv}$, there are a total of $(K_{prs})^1 + \cdots (K_{prs})^{M_{reserv}-1} + (K_{prs})^{M_{reserv}-1}$ indication possibilities, indicating that a plurality of slots may be independently indicated, and the reference signal resource in the slot in which the SCI is located does not need to be indicated by the SCI. For example, there are $K_{prs}$ possibilities when only one slot is indicated, there are $(K_{prs})^2$ possibilities when two slots are indicated, and there are $(K_{prs})^{M_{reserv}-1}$ possibilities when $M_{reserv}$ - 1 slots are indicated.

Optionally, the length of the reference signal resource assignment field may be $\left\lceil \log_2 (K_{prs})^1 + \cdots (K_{prs})^{M_{reserv}-1} \right\rceil$ .

Optionally, the embodiment shown in FIG. 6 further includes step 601a. Step 601a may be performed before step 601.

601a: A third communication apparatus sends configuration information to the first communication apparatus. The configuration information is for configuring the P preconfigured positioning reference signal resources. Correspondingly, the first communication apparatus receives the configuration information from the third communication apparatus.

Optionally, the third communication apparatus may be a network device. For example, the third communication apparatus is an access network device. For the configuration of the positioning reference signal resource, refer to related descriptions of the foregoing technical terms.

For example, as shown in FIG. 4, the first communication apparatus is the terminal device 401, and the third communication apparatus may be the access network device 403. The access network device 403 may send the configuration information to the terminal device 401. In this case, the terminal device 401 receives the configuration information, and determines the P preconfigured positioning reference signal resources based on the configuration information. Therefore, the terminal device 401 subsequently selects a reserved positioning reference signal resource from the P preconfigured positioning reference signal resources.

Optionally, the configuration information may be carried in an RRC message, DCI, or a media access control control element (media access control control element, MAC CE). This is not specifically limited in this application.

It should be noted that the third communication apparatus may configure the P preconfigured positioning reference signal resources based on an actual requirement, and update the P preconfigured positioning reference signal resources to the first communication apparatus. For example, the third communication apparatus configures the positioning reference signal resource 1 to the positioning reference signal resource 4 shown in FIG. 8 for the first communication apparatus for the first time. However, in a subsequent positioning process, to improve positioning accuracy and avoid interference between signals, the third communication apparatus may update a configured positioning reference signal resource. For example, the third communication apparatus may configure the positioning reference signal resource 1 and the positioning reference signal resource 2 shown in FIG. 9 for the first communication apparatus. Alternatively, the third communication apparatus may configure the positioning reference signal resource 1 and the positioning reference signal resource 3 shown in FIG. 8 for the first communication apparatus, that is, deactivate the positioning reference signal resource 2 and the positioning reference signal resource 4.

It can be learned that, in the technical solution of this application, a granularity of resource reservation performed by a terminal device is a reference signal resource, and the P preconfigured reference signal resources may be flexibly configured in a preconfiguration manner. Compared with a solution in which a subchannel is reserved from a subchannel included in full bandwidth, the technical solution of this application has higher flexibility, higher positioning accuracy, and higher practicability.

Optionally, the embodiment shown in FIG. 6 further includes step 601b. Step 601b may be performed before step 601.

601b: The third communication apparatus sends DCI to the first communication apparatus. Correspondingly, the first communication apparatus receives the DCI from the third communication apparatus.

The DCI indicates the first communication apparatus to reserve the M positioning reference signal resources.

Optionally, the DCI includes a third field, and the third field indicates the first communication apparatus to reserve the M positioning reference signal resources. The third field is similar to the first field. For details, refer to the foregoing related descriptions of the first field.

Optionally, the DCI further indicates the first communication apparatus to reserve the N time units.

For example, as shown in FIG. 4, the first communication apparatus is the terminal device 401, and the third communication apparatus may be the access network device 403. The access network device 403 may send the DCI to the terminal device 401. The DCI indicates the first communication apparatus to reserve the M positioning reference signal resources and the N time units.

In a possible implementation, the third field further indicates the first communication apparatus to reserve the N time units. In other words, the third field indicates the first communication apparatus to reserve the M positioning reference signal resources and the N time units.

In another possible implementation, the DCI further includes a fourth field, and the fourth field indicates the first communication apparatus to reserve the N time units. The fourth field is similar to the second field. For details, refer to the foregoing related descriptions of the second field.

Optionally, there is no fixed execution sequence between step 601a and step 601b. Step 601a may be performed before step 601b, or step 601a and step 601b may be simultaneously performed based on a situation. This is not specifically limited in this application.

602: The first communication apparatus sends the SCI to the second communication apparatus. Correspondingly, the second communication apparatus receives the SCI from the first communication apparatus.

For example, the first communication apparatus is a first terminal device, and the second communication apparatus is a second terminal device. The first terminal device sends the SCI to the second terminal device. In this way, the second terminal device may determine that the first terminal device is to send a positioning reference signal on the M positioning reference signal resources corresponding to the N time units.

Specifically, the first terminal device may broadcast the SCI. In this way, another terminal device in the sidelink communication system learns of specific slots in which the first terminal device reserves specific positioning reference signal resources. The another terminal device may keep away from the positioning reference signal resources reserved by the first terminal device, to avoid a conflict or a collision.

For the first communication apparatus, each time before the positioning reference signal is sent, the first communication apparatus may send the SCI, to indicate one or several specific positioning reference signal resources corresponding to specific time units in which the first communication apparatus sends the positioning reference signal. For example, as shown in FIG. 7, the first communication apparatus sends SCI 1, and the SCI 1 indicates that the first communication apparatus is to send a positioning reference signal on the positioning reference signal resource 1 in the slot 1, the positioning reference signal resource 3 in the slot 12, and the positioning reference signal resource 2 in the slot 15. Then, the first communication apparatus sends the positioning reference signal on the positioning reference signal resource 1 in the slot 1. The first communication apparatus may send SCI 2. The SCI 2 indicates that the first communication apparatus is to send a positioning reference signal on the positioning reference signal resource 3 in the slot 12, the positioning reference signal resource 15 in the slot 15, and the positioning reference signal resource 2 in the slot 20.

603: The second communication apparatus receives the positioning reference signal from the first communication apparatus based on the first SCI.

Specifically, as shown in FIG. 7, the first communication apparatus may send a positioning reference signal on the positioning reference signal resource 1 in the slot 1, the positioning reference signal resource 3 in the slot 12, and the positioning reference signal resource 2 in the slot 15. The second communication apparatus may receive, on the positioning reference signal resource 1 in the slot 1, the positioning reference signal resource 3 in the slot 12, and the positioning reference signal resource 2 in the slot 15, the positioning reference signal sent by the first communication apparatus. Then, the second communication apparatus may perform sidelink positioning and/or ranging on the first communication apparatus based on the positioning reference signal. In this way, sidelink positioning and/or ranging between the first communication apparatus and the second communication apparatus are/is implemented.

In this embodiment of this application, the first communication apparatus determines the SCI, where the SCI indicates or is for reserving the M positioning reference signal resources, the M positioning reference signal resources correspond to the N time units, each time unit corresponds to at least one positioning reference signal resource, and both M and N are integers greater than or equal to 1. The N time units include the P preconfigured positioning reference signal resources, or the resource pool in which the N time units are located includes the P preconfigured positioning reference signal resources. The M positioning reference signal resources are a part or all of the P preconfigured positioning reference signal resources, and P is an integer greater than or equal to 1. Then, the first communication apparatus sends the SCI to the second communication apparatus. It can be learned that a granularity of resource reservation performed by a terminal device is a reference signal resource, and the P preconfigured positioning reference signal resources may be flexibly configured in a preconfiguration manner. This helps improve flexibility of reserving a positioning reference signal resource by the first communication apparatus, and reduce complexity of reserving the resource by the first communication apparatus. The second communication apparatus may determine, based on the SCI, that the first communication apparatus is to send a positioning reference signal on the M positioning reference signal resources in the N time units. In this way, the second communication apparatus receives, on corresponding time-frequency resources, the positioning reference signal sent by the first communication apparatus, thereby implementing sidelink positioning between the first communication apparatus and the second communication apparatus.

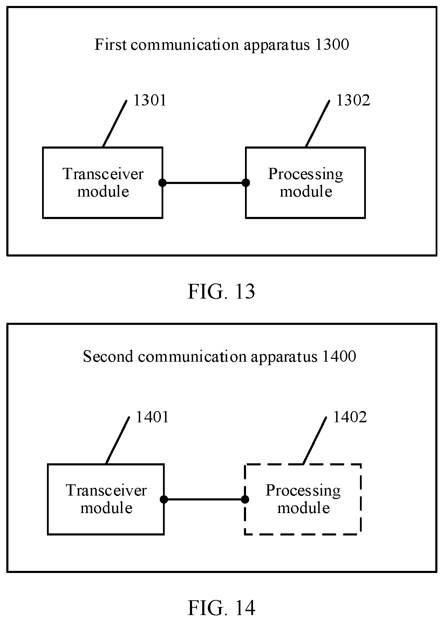

The following describes the first communication apparatus provided in embodiments of this application. Refer to FIG. 13. FIG. 13 is a diagram of a structure of a first communication apparatus according to an embodiment of this application. The first communication apparatus may be configured to perform a step performed by the first communication apparatus in the embodiment shown in FIG. 6. For details, refer to related descriptions in the foregoing method embodiment.

The first communication apparatus 1300 includes a transceiver module 1301 and a processing module 1302.

The transceiver module 1301 may implement a corresponding communication function. The transceiver module 1301 may also be referred to as a communication interface or a communication unit. The processing module 1302 is configured to perform a processing operation.

Optionally, the first communication apparatus 1300 may further include a storage module. The storage module may be configured to store instructions and/or data. The processing module 1302 may read the instructions and/or the data in the storage module, so that the communication apparatus implements the method embodiment shown in FIG. 6.

The first communication apparatus 1300 may be configured to execute an action performed by the first communication apparatus in the foregoing method embodiment. The first communication apparatus 1300 may be a first communication apparatus or a component that may be disposed in the first communication apparatus. The transceiver module 1301 is configured to perform a receiving-related operation on the first communication apparatus side in the foregoing method embodiment, and the processing module 1302 is configured to perform a processing-related operation on the first communication apparatus side in the foregoing method embodiment.

Optionally, the transceiver module 1301 may include a sending module and a receiving module. The sending module is configured to perform a sending operation of the first communication apparatus in the foregoing method embodiment shown in FIG. 6. The receiving module is configured to perform a receiving operation of the first communication apparatus in the foregoing method embodiment shown in FIG. 6.

It should be noted that the first communication apparatus 1300 may include the sending module but not include the receiving module. Alternatively, the first communication apparatus 1300 may include the receiving module but not include the sending module. This may be specifically determined depending on whether the foregoing solution performed by the first communication apparatus 1300 includes a sending action and a receiving action. The first communication apparatus 1300 may perform the following solution:

The processing module 1302 is configured to determine SCI, where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1. The transceiver module 1301 is configured to send the SCI to a second communication apparatus.

In a possible implementation, the SCI further indicates or is further for reserving the N time units.

In another possible implementation, the SCI includes a first field, and the first field indicates or is for reserving the M positioning reference signal resources.

In another possible implementation, a length of the first field is determined based on a maximum quantity of time units that can be indicated or reserved by the SCI or a maximum quantity of positioning reference signal resources that can be indicated or reserved by the SCI.

In another possible implementation, when the N time units include the P preconfigured positioning reference signal resources, each time unit includes a same quantity of preconfigured positioning reference signal resources. The length of the first field is determined based on the maximum quantity of time units that can be indicated or reserved by the SCI and the quantity of preconfigured positioning reference signal resources included in each time unit; or the length of the first field is determined based on the maximum quantity of positioning reference signal resources that can be indicated or reserved by the SCI and the quantity of preconfigured positioning reference signal resources included in each time unit.

In another possible implementation, when the resource pool in which the N time units are located includes the P preconfigured positioning reference signal resources, the N time units belong to a same resource pool. The length of the first field is determined based on the maximum quantity of time units that can be indicated or reserved by the SCI and a quantity of preconfigured positioning reference signal resources included in the resource pool; or the length of the first field is determined based on the maximum quantity of positioning reference signal resources that can be indicated or reserved by the SCI and a quantity of preconfigured positioning reference signal resources included in the resource pool.

In another possible implementation, the length of the first field meets the following condition:

$$\left\lceil \log_2 N_{slprs}{}^{K_{reserve}} \right\rceil \quad \text{or} \quad \left\lceil \log_2 N_{slprs}{}^{K_{reserve}} \right\rceil + X \quad . \quad \left\lceil \log_2 N_{slprs}{}^{K_{reserve}} \right\rceil \text{ represents rounding}$$

on $\log_2 N_{slprs}{}^{K_{reserve}}$, $\log_2 N_{slprs}{}^{K_{reserve}}$ represents calculating the logarithm of $N_{slprs}{}^{K_{reserve}}$ with a base 2, and $N_{slprs}$ represents the quantity of preconfigured positioning reference signal resources included in each time unit. $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X is equal to -1, -2, -3, 0, 1, 2, 3, or the like.

In another possible implementation, the length of the first field meets the following condition:

$$\left\lceil \log_2 Q^{K_{reserve}} \right\rceil \quad \text{or} \quad \left\lceil \log_2 Q^{K_{reserve}} \right\rceil + X \quad . \quad \left\lceil \log_2 Q^{K_{reserve}} \right\rceil \text{ represents rounding on}$$

$\log_2 Q^{K_{reserve}}$, $\log_2 Q^{K_{reserve}}$ represents calculating the logarithm of $Q^{K_{reserve}}$ with a base 2, Q represents the quantity of preconfigured positioning reference signal resources included in the resource pool, and $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X is equal to -1, -2, - 3, 0, 1, 2, 3, or the like.

In another possible implementation, the length of the first field meets the following condition:

$$\left\lceil log_2 \left[ (N_{slprs})^{k_{reserve}-k_0} + k_1 \right] \right\rceil.$$

$N_{slprs}$ represents the quantity of preconfigured positioning reference signal resources included in each time unit, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1. $k_1$ is an integer greater than or equal to 0, or $k_1$ is determined according to a system coefficient. For example, $k_1 = k_0$, $k_1 = k_{reserve}$, or $k_1 = N_{slprs}$.

In another possible implementation, the length of the first field meets the following condition:

$$\left\lceil log_2 \left[ (N_{slprs})^{k_{reserve}-k_0} + (N_{slprs})^{k_{reserve}-k_0-1} + \cdots (N_{slprs})^0 + a \right] \right\rceil.$$

$N_{slprs}$ represents the quantity of preconfigured positioning reference signal resources included in each time unit, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = N_{slprs}$.

In another possible implementation, the length of the first field meets the following condition:

$$\lceil log_2[(Q)^{k_{reserve}-k_0} + k_1]\rceil$$

.

$Q$ represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1 $k_1$ is an integer greater than or equal to 0, or $k_1$ is determined according to a system coefficient. For example, $k_1=k_0$, $k_1=k_{reserve}$, or $k_1 = Q$.

In another possible implementation, the length of the first field meets the following condition:

$$\lceil log_2[(Q)^{k_{reserve}-k_0} + (Q)^{k_{reserve}-k_0-1} + \cdots (Q)^0 + a]\rceil$$.

$Q$ represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = Q$.

In another possible implementation, the length of the first field is 4W bits, and W is an integer greater than or equal to 1.

In another possible implementation, the length of the first field is 4 bits, 8 bits, or 12 bits.

In another possible implementation, when the SCI indicates or is for reserving only a positioning reference signal resource in one time unit, the length of the first field is 4 bits;

when the SCI indicates or is for reserving positioning reference signal resources in two time units, the length of the first field is 8 bits; or
when the SCI indicates or is for reserving positioning reference signal resources in three time units, the length of the first field is 12 bits.

In another possible implementation, the length of the first field is 8 bits, the 4 most significant bits in the first field indicate a positioning reference signal resource in the 1st time unit in the two time units, and the 4 least significant bits in the first field indicate a positioning reference signal in the 2nd time unit in the two time units.

In another possible implementation, $k_{reserve}$ is indicated by RRC signaling. For example, in a possible implementation, $k_{reserve}$ is indicated by using an information element in configuration signaling related to a sidelink resource pool in the RRC signaling. For example, $k_{reserve}$ is indicated by using a maximum sidelink reserved (sl-MaxNumPerReserve) information element in configuration signaling related to a sidelink resource pool in the RRC signaling.

In another possible implementation, a calculation formula of the length of the first field may indicate that the length of the first field is related to a maximum quantity of resources or a maximum quantity of time units that can be indicated in each time of sidelink control signaling transmission.

In another possible implementation, the calculation formula of the length of the first field may indicate that only $k_{reserve}$ - $k_0$ positioning reference signal resources need to be indicated in the $k_{reserve}$ positioning reference signal resources that can be reserved. The other $k_0$ positioning reference signal resources are indicated in another manner. For example, the $k_0$ positioning reference signal resources are indicated by using frequency domain location information or time domain location information of a PSCCH carrying control signaling (for example, SCI). Optionally, the frequency domain location information includes a start frequency or bandwidth. The start frequency includes a start RB, a start subchannel, any other frequency-related information, or the like. The bandwidth includes a bandwidth size, for example, a quantity of RBs, a quantity of subchannels, or a quantity of REs. The time domain location information includes information such as a slot, a start symbol, a subframe, and/or a frame.

In another possible implementation, the value of the first field meets the following condition: $I_1 + I_2 \times N_{slprs} + \cdots I_N \times (N_{slprs})^{N-1}$ or $I_1 + I_2 \times N_{slprs} + \cdots I_N \times (N_{slprs})^{N-1} + Y$. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times N_{slprs} + \cdots I_N \times (N_{slprs})^{N-1} - 1$ or $I_1 + I_2 \times N_{slprs} + \cdots I_N \times (N_{slprs})^{N-1} - 1 + Y$. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times Q + \cdots I_N \times (Q)^{N-1}$ or $I_1 + I_2 \times Q + \cdots I_N \times (Q)^{N-1} + Y$. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times Q + \cdots I_N \times (Q)^{N-1} - 1$ or $I_1 + I_2 \times Q + \cdots I_N \times (Q)^{N-1} - 1 + Y$. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the Nth time unit in the N time units indicated or reserved by the SCI, Q represents the quantity of preconfigured positioning reference signal resources included in the resource pool, and indexes of the preconfigured positioning reference signal resources included in the resource pool are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the SCI includes a first field, and the first field indicates or is for reserving the M positioning reference signal resources and the N time units.

In another possible implementation, frequency bands occupied by different positioning reference signal resources in the P preconfigured positioning reference signal resources have an overlapping part.

In another possible implementation, each positioning reference signal resource in the P preconfigured positioning reference signal resources occupies a part or all of bandwidth of a resource pool.

In another possible implementation, when the N time units include the P preconfigured positioning reference signal resources, configurations of preconfigured positioning reference signal resources included in different time units are the same.

In another possible implementation, the transceiver module 1301 is further configured to receive DCI from a third communication apparatus, where the DCI indicates the first communication apparatus 1300 to reserve the M positioning reference signal resources.

In another possible implementation, the DCI further indicates the first communication apparatus 1300 to reserve the N time units.

In another possible implementation, the transceiver module 1301 is further configured to receive configuration information from the third communication apparatus, where the configuration information is for configuring the P preconfigured positioning reference signal resources.

In another possible implementation, the SCI further includes a second field, and the second field is for reserving the N time units.

In another possible implementation, a length of the second field is determined based on the maximum quantity of time units that can be indicated or reserved by the SCI or the maximum quantity of positioning reference signal resources that can be indicated or reserved by the SCI.

In another possible implementation, when the N time units include two slots, the length of the second field is 5 bits; or when the N time units include three slots, the length of the second field is 9 bits.

In another possible implementation, when the N time units include the P preconfigured positioning reference signal resources, different positioning reference signal resources in preconfigured positioning reference signal resources included in each time unit meet a frequency division multiplexing relationship on a same time domain resource; when the N time units include the P preconfigured positioning reference signal resources, different positioning reference signal resources in preconfigured positioning reference signal resources included in each time unit meet a time division multiplexing relationship on a same frequency domain resource; or when the N time units include the P preconfigured positioning reference signal resources, in preconfigured positioning reference signal resources included in each time unit, positioning reference signal resources occupying a same time domain resource meet a frequency division multiplexing relationship on a same time domain resource, and positioning reference signal resources occupying a same frequency domain resource meet a time division multiplexing relationship on a same frequency domain resource.

The following describes the second communication apparatus provided in embodiments of this application. Refer to FIG. 14. FIG. 14 is a diagram of a structure of a second communication apparatus according to an embodiment of this application. The second communication apparatus may be configured to perform a step performed by the second communication apparatus in the embodiment shown in FIG. 6. For details, refer to related descriptions in the foregoing method embodiment.

The second communication apparatus 1400 includes a transceiver module 1401. Optionally, the second communication apparatus 1400 further includes a processing module 1402.

The transceiver module 1401 may implement a corresponding communication function. The transceiver module 1401 may also be referred to as a communication interface or a communication unit. The processing module 1402 is configured to perform a processing operation.

Optionally, the second communication apparatus 1400 may further include a storage module. The storage module may be configured to store instructions and/or data. The processing module 1402 may read the instructions and/or the data in the storage module, so that the communication apparatus implements the method embodiment shown in FIG. 6.

The second communication apparatus 1400 may be configured to execute an action performed by the second communication apparatus in the foregoing method embodiment. The second communication apparatus 1400 may be a second communication apparatus or a component that may be disposed in the second communication apparatus. The transceiver module 1401 is configured to perform a receiving-related operation on the second communication apparatus side in the foregoing method embodiment, and the processing module 1402 is configured to perform a processing-related operation on the second communication apparatus side in the foregoing method embodiment.

Optionally, the transceiver module 1401 may include a sending module and a receiving module. The sending module is configured to perform a sending operation of the second communication apparatus in the foregoing method embodiment shown in FIG. 6. The receiving module is configured to perform a receiving operation of the second communication apparatus in the foregoing method embodiment shown in FIG. 6.

It should be noted that the second communication apparatus 1400 may include the sending module but not include the receiving module. Alternatively, the second communication apparatus 1400 may include the receiving module but not include the sending module. This may be specifically determined depending on whether the foregoing solution performed by the second communication apparatus 1400 includes a sending action and a receiving action. The second communication apparatus 1400 may perform the following solution:

The transceiver module 1401 is configured to: receive SCI from a first communication apparatus, where the SCI indicates or is for reserving M positioning reference signal resources, the M positioning reference signal resources correspond to N time units, each time unit corresponds to at least one positioning reference signal resource, both M and N are integers greater than or equal to 1, the N time units include P preconfigured positioning reference signal resources, or a resource pool in which the N time units are located includes P preconfigured positioning reference signal resources, the M positioning reference signal resources are a part or all of the P preconfigured positioning reference signal resources, and P is an integer greater than or equal to 1; and receive a positioning reference signal from the first communication apparatus based on the SCI.

In a possible implementation, the SCI further indicates or is further for reserving the N time units.

In another possible implementation, the SCI includes a first field, and the first field indicates or is for reserving the M positioning reference signal resources.

In another possible implementation, a length of the first field is determined based on a maximum quantity of time units that can be indicated or reserved by the SCI or a maximum quantity of positioning reference signal resources that can be indicated or reserved by the SCI.

In another possible implementation, when the N time units include the P preconfigured positioning reference signal resources, each time unit includes a same quantity of preconfigured positioning reference signal resources. The length of the first field is determined based on the maximum quantity of time units that can be indicated or reserved by the SCI and the quantity of preconfigured positioning reference signal resources included in each time unit; or the length of the first field is determined based on the maximum quantity of positioning reference signal resources that can be indicated or reserved by the SCI and the quantity of preconfigured positioning reference signal resources included in each time unit.

In another possible implementation, when the resource pool in which the N time units are located includes the P preconfigured positioning reference signal resources, the N time units belong to a same resource pool. The length of the first field is determined based on the maximum quantity of time units that can be indicated or reserved by the SCI and a quantity of preconfigured positioning reference signal resources included in the resource pool; or the length of the first field is determined based on the maximum quantity of positioning reference signal resources that can be indicated or reserved by the SCI and a quantity of preconfigured positioning reference signal resources included in the resource pool.

In another possible implementation, the length of the first field meets the following condition:

$$\left\lceil \log_2 N_{slprs}{}^{K_{reserve}} \right\rceil \quad \text{or} \quad \left\lceil \log_2 N_{slprs}{}^{K_{reserve}} \right\rceil + X \cdot \left\lceil \log_2 N_{slprs}{}^{K_{reserve}} \right\rceil \quad \text{represents}$$

rounding on $\log_2 N_{slprs}{}^{K_{reserve}}$, $\log_2 N_{slprs}{}^{K_{reserve}}$ represents calculating the logarithm of $N_{slprs}{}^{K_{reserve}}$ with a base 2, and $N_{slprs}$ represents the quantity of preconfigured positioning reference signal resources included in each time unit. $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X is equal to -1, -2, -3, 0, 1, 2, 3, or the like.

In another possible implementation, the length of the first field meets the following condition:

$$\left\lceil \log_2 Q^{K_{reserve}} \right\rceil \quad \text{or} \quad \left\lceil \log_2 Q^{K_{reserve}} \right\rceil + X \cdot \left\lceil \log_2 Q^{K_{reserve}} \right\rceil \quad \text{represents rounding on}$$

$\log_2 Q^{K_{reserve}}$, $\log_2 Q^{K_{reserve}}$ represents calculating the logarithm of $Q^{K_{reserve}}$ with a base 2, Q represents the quantity of preconfigured positioning reference signal resources included in the resource pool, and $K_{reserve}$ represents the maximum quantity of positioning reference signal resources that can be indicated by the SCI or the maximum quantity of time units that can be indicated by the SCI. X is a constant, and X is predefined, or is obtained through calculation. Optionally, X may be equal to a natural number such as 0, 1, 2, or 3. Alternatively, optionally, X is an integer, and X is equal to -1, -2, -3, 0, 1, 2, 3, or the like.

In another possible implementation, the length of the first field meets the following condition:

$$\left\lceil log_2 \left[ \left( N_{slprs} \right)^{k_{reserve} - k_0} + k_1 \right] \right\rceil.$$

$N_{slprs}$ represents the quantity of preconfigured positioning reference signal resources included in each time unit, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1. $k_1$ is an integer greater than or equal to 0, or $k_1$ is determined according to a system coefficient. For example, $k_1 = k_0$, $k_1 = k_{reserve}$, or $k_1 = N_{slprs}$.

In another possible implementation, the length of the first field meets the following condition:

$$\left\lceil log_2 \left[ \left( N_{slprs} \right)^{k_{reserve} - k_0} + \left( N_{slprs} \right)^{k_{reserve} - k_0 - 1} + \cdots \left( N_{slprs} \right)^0 + a \right] \right\rceil.$$

$N_{slprs}$ represents the quantity of preconfigured positioning reference signal resources included in each time unit, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = N_{slprs}$.

In another possible implementation, the length of the first field meets the following condition:

$$\left\lceil log_2 \left[ (Q)^{k_{reserve} - k_0} + k_1 \right] \right\rceil.$$

Q represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1. $k_1$ is an integer greater than or equal to 0, or $k_1$ is determined according to a system coefficient. For example, $k_1 = k_0$, $k_1 = k_{reserve}$, or $k_1 = Q$.

In another possible implementation, the length of the first field meets the following condition:

$$\left\lceil log_2 \left[ (Q)^{k_{reserve} - k_0} + (Q)^{k_{reserve} - k_0 - 1} + \cdots (Q)^0 + a \right] \right\rceil.$$

$Q$ represents the quantity of preconfigured positioning reference signal resources included in the resource pool, and $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field. $k_0$ is an integer greater than or equal to 1, and $a$ is an integer greater than or equal to 0. In a possible implementation, $a=0$, or $a=1$. In another possible implementation, $a=k_0$, $a = k_{reserve}$, or $a = Q$.

In another possible implementation, the length of the first field is 4W bits, and W is an integer greater than or equal to 1.

In another possible implementation, the length of the first field is 4 bits, 8 bits, or 12 bits.

In another possible implementation, when the SCI indicates or is for reserving only a positioning reference signal resource in one time unit, the length of the first field is 4 bits;

when the SCI indicates or is for reserving positioning reference signal resources in two time units, the length of the first field is 8 bits; or

when the SCI indicates or is for reserving positioning reference signal resources in three time units, the length of the first field is 12 bits.

In another possible implementation, the length of the first field is 8 bits, the 4 most significant bits in the first field indicate a positioning reference signal resource in the 1st time unit in the two time units, and the 4 least significant bits in the first field indicate a positioning reference signal in the 2nd time unit in the two time units.

In another possible implementation, $k_{reserve}$ is indicated by RRC signaling. For example, in a possible implementation, $k_{reserve}$ is indicated by using an information element in configuration signaling related to a sidelink resource pool in the RRC signaling. For example, $k_{reserve}$ is indicated by using a maximum sidelink reserved (sl-MaxNumPerReserve) information element in configuration signaling related to a sidelink resource pool in the RRC signaling.

In another possible implementation, a calculation formula of the length of the first field may indicate that the length of the first field is related to a maximum quantity of resources or a maximum quantity of time units that can be indicated in each time of sidelink control signaling transmission.

In another possible implementation, the calculation formula of the length of the first field may indicate that only $k_{reserve}$ - $k_0$ positioning reference signal resources need to be indicated in the $k_{reserve}$ positioning reference signal resources that can be reserved. The other $k_0$ positioning reference signal resources are indicated in another manner. For example, the $k_0$ positioning reference signal resources are indicated by using frequency domain location information or time domain location information of a PSCCH carrying control signaling (for example, SCI). Optionally, the frequency domain location information includes a start frequency or bandwidth. The start frequency includes an RB, a start subchannel, any other frequency-related information, or the like. The bandwidth includes a bandwidth size, for example, a quantity of RBs, a quantity of subchannels, or a quantity of REs. The time domain location information includes information such as a slot, a start symbol, a subframe, and/or a frame.

In another possible implementation, the value of the first field meets the following condition: $I_1 + I_2 \times N_{slprs} + \cdots I_N \times (N_{slprs})^{N-1}$ or $I_1 + I_2 \times N_{slprs} + \cdots I_N \times (N_{slprs})^{N-1} + Y$.

$I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the N$^{th}$ time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times N_{slprs} + \cdots I_N \times (N_{slprs})^{N-1}$ - 1 or $I_1 + I_2 \times N_{slprs} + \cdots I_N \times (N_{slprs})^{N-1}$ - 1 + Y. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the N$^{th}$ time unit in the N time units indicated or reserved by the SCI, $N_{slprs}$ represents the quantity of preconfigured positioning reference signal resources included in each time unit, and indexes of the preconfigured positioning reference signal resources included in each of the N time units are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times Q + \cdots I_N \times (Q)^{N-1}$ or $I_1 + I_2 \times Q + \cdots I_N \times (Q)^{N-1}$ + Y. $I_1$ represents an index of a positioning reference signal resource in the 1st time unit in the N time units indicated or reserved by the SCI, $I_2$ represents an index of a positioning reference signal resource in the 2nd time unit in the N time units indicated or reserved by the SCI, $I_N$ is an index of a positioning reference signal resource in the N$^{th}$ time unit in the N time units indicated or reserved by the SCI, Q represents the quantity of preconfigured positioning reference signal resources included in the resource pool, and indexes of the preconfigured positioning reference signal resources included in the resource pool are encoded from 0. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the value of the first field meets the following condition: $I_1 + I_2 \times Q + \cdots I_N \times (Q)^{N-1} - 1$ or $I_1 + I_2 \times Q + \cdots I_N \times (Q)^{N-1} - 1 + Y$. $I_1$ represents an index of a positioning reference signal resource in the 1$^{st}$ time unit in the N time units indicated or reserved by the SCI, $I_2$ represents an index of a positioning reference signal resource in the 2$^{nd}$ time unit in the N time units indicated or reserved by the SCI, $I_N$ is an index of a positioning reference signal resource in the N$^{th}$ time unit in the N time units indicated or reserved by the SCI, Q represents the quantity of preconfigured positioning reference signal resources included in the resource pool, and indexes of the preconfigured positioning reference signal resources included in the resource pool are encoded from 1. Y is a constant, and Y is predefined, or is obtained through calculation. Optionally, Y may be equal to a natural number such as 0, 1, 2, or 3. Alternatively, optionally, Y is an integer, and Y may be equal to -1, -2, -3, 0, 1, 2, 3, or the like.

In another possible implementation, the SCI includes a first field, and the first field indicates or is for reserving the M positioning reference signal resources and the N time units.

In another possible implementation, frequency bands occupied by different positioning reference signal resources in the P preconfigured positioning reference signal resources have an overlapping part.

In another possible implementation, each positioning reference signal resource in the P preconfigured positioning reference signal resources occupies a part or all of bandwidth of a resource pool.

In another possible implementation, when the N time units include the P preconfigured positioning reference signal resources, configurations of preconfigured positioning reference signal resources included in different time units are the same.

In another possible implementation, the SCI further includes a second field, and the second field is for reserving the N time units.

In another possible implementation, a length of the second field is determined based on the maximum quantity of time units that can be indicated or reserved by the SCI or the maximum quantity of positioning reference signal resources that can be indicated or reserved by the SCI.

In another possible implementation, when the N time units include two slots, the length of the second field is 5 bits; or when the N time units include three slots, the length of the second field is 9 bits.

In another possible implementation, when the N time units include the P preconfigured positioning reference signal resources, different positioning reference signal resources in preconfigured positioning reference signal resources included in each time unit meet a frequency division multiplexing relationship on a same time domain resource; when the N time units include the P preconfigured positioning reference signal resources, different positioning reference signal resources in preconfigured positioning reference signal resources included in each time unit meet a time division multiplexing relationship on a same frequency domain resource; or when the N time units include the P preconfigured positioning reference signal resources, in preconfigured positioning reference signal resources included in each time unit, positioning reference signal resources occupying a same time domain resource meet a frequency division multiplexing relationship on a same time domain resource, and positioning reference signal resources occupying a same frequency domain resource meet a time division multiplexing relationship on a same frequency domain resource.

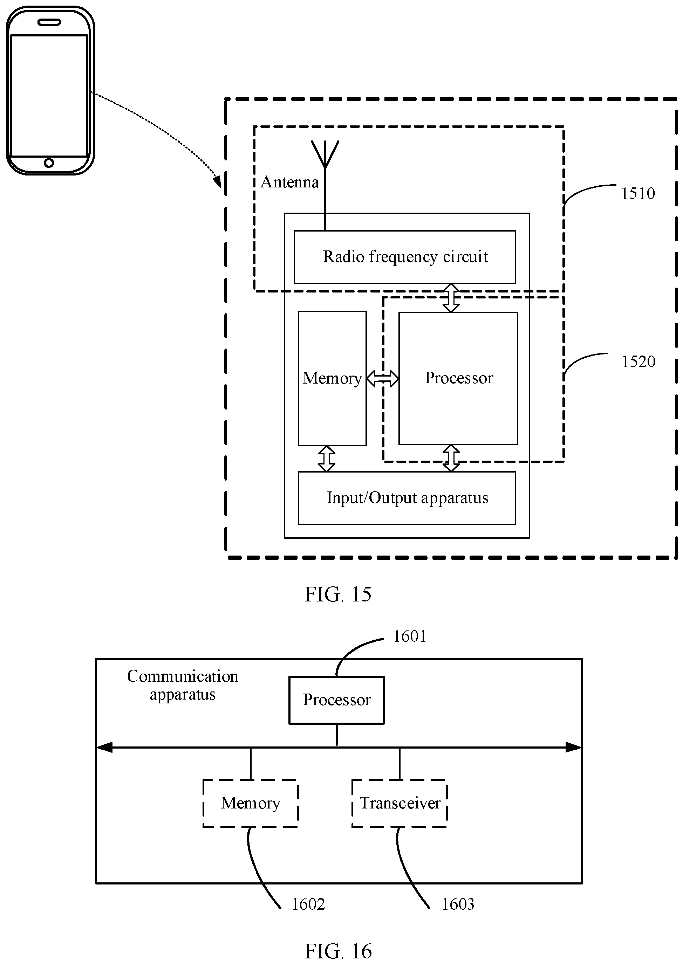

FIG. 15 is a diagram of a possible structure of a first communication apparatus or a second communication apparatus serving as a terminal device below.

FIG. 15 is a simplified diagram of a structure of the terminal device. For ease of understanding and illustration, an example in which the terminal device is a mobile phone is used in FIG. 15. As shown in FIG. 15, the terminal device includes a processor, a memory, a radio frequency circuit, an antenna, and an input/output apparatus.

The processor is mainly configured to: process a communication protocol and communication data, control the terminal device, execute a software program, process data of the software program, and the like. The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 15 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 15, the terminal device includes a transceiver unit 1510 and a processing unit 1520. The transceiver unit may also be referred to as a transceiver, a transceiver machine, a transceiver apparatus, or the like. The processing unit may also be referred to as a processor, a processing board, a processing module, a processing apparatus, or the like.

Optionally, a component configured to implement a receiving function in the transceiver unit 1510 may be considered as a receiving unit, and a component configured to implement a sending function in the transceiver unit 1510 may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1510 is configured to perform a sending operation and a receiving operation of the first communication apparatus or the second communication apparatus in the foregoing method embodiment, and the processing unit 1520 is configured to perform other operations than the sending and receiving operations of the first communication apparatus or the second communication apparatus in the foregoing method embodiment.

When the first communication apparatus or the second communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 16 is another diagram of a structure of a communication apparatus according to an embodiment of this application. The communication apparatus may be configured to perform a step performed by the first communication apparatus or the second communication apparatus in the embodiment shown in FIG. 6. For details, refer to related descriptions in the foregoing method embodiment.

The communication apparatus includes a processor 1601. Optionally, the communication apparatus further includes a memory 1602 and a transceiver 1603.

In a possible implementation, the processor 1601, the memory 1602, and the transceiver 1603 are separately connected through a bus, and the memory stores computer instructions.

Optionally, the processing module 1302 in the foregoing embodiment may be specifically the processor 1601 in this embodiment. Therefore, a specific implementation of the processor 1601 is not described again. The transceiver module 1301 in the foregoing embodiment may be specifically the transceiver 1603 in this embodiment. Therefore, a specific implementation of the transceiver 1603 is not described again.

Optionally, the processing module 1402 in the foregoing embodiment may be specifically the processor 1601 in this embodiment. Therefore, a specific implementation of the processor 1601 is not described again. The transceiver module 1401 in the foregoing embodiment may be specifically the transceiver 1603 in this embodiment. Therefore, a specific implementation of the transceiver 1603 is not described again.

An embodiment of this application further provides a communication system, and the communication system includes a first communication apparatus and a second communication apparatus. The first communication apparatus is configured to perform all or some of the steps performed by the first communication apparatus in the embodiment shown in FIG. 6. The second communication apparatus is configured to perform all or some of the steps performed by the second communication apparatus in the embodiment shown in FIG. 6.

An embodiment of this application further provides a computer program product including instructions. When the computer program product runs on a computer, the computer is enabled to perform the method in the embodiment shown in FIG. 6.

An embodiment of this application further provides a computer-readable storage medium, including computer instructions. When the computer instructions are run on a computer, the computer is enabled to perform the method in the embodiment shown in FIG. 6.

An embodiment of this application further provides a chip apparatus, including a processor, configured to connect to a memory and invoke a program stored in the memory, so that the processor performs the method in the embodiment shown in FIG. 6.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 6. The memory mentioned in any one of the foregoing may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for a detailed working process of the foregoing system, apparatus, and unit, refer to a corresponding process in the foregoing method embodiment, and details are not described herein again.

In several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A resource indication method, wherein the method comprises:

   determining, by a first communication apparatus, sidelink control information SCI, wherein
   the SCI indicates M positioning reference signal resources, the M positioning reference signal resources correspond to N time units, each time unit corresponds to at least one positioning reference signal resource, and both M and N are integers greater than or equal to 1; the N time units comprise P preconfigured positioning reference signal resources, or a resource pool in which the N time units are located comprises P preconfigured positioning reference signal resources; and the M positioning reference signal resources are a part or all of the P preconfigured positioning reference signal resources, and P is an integer greater than or equal to 1; and
   sending, by the first communication apparatus, the SCI to a second communication apparatus.

2. A resource indication method, wherein the method comprises:

   receiving, by a second communication apparatus, SCI from a first communication apparatus, wherein
   the SCI indicates M positioning reference signal resources, the M positioning reference signal resources correspond to N time units, each time unit corresponds to at least one positioning reference signal resource, and both M and N are integers greater than or equal to 1; the N time units comprise P preconfigured positioning reference signal resources, or a resource pool in which the N time units are located comprises P preconfigured positioning reference signal resources; and the M positioning reference signal resources are a part or all of the P preconfigured positioning reference signal resources, and P is an integer greater than or equal to 1; and
receiving, by the second communication apparatus, a positioning reference signal from the first communication
apparatus based on the SCI.

3. The method according to claim 1 or 2, wherein the SCI further indicates the N time units.

4. The method according to any one of claims 1 to 3, wherein the SCI comprises a first field, and the first field indicates the M positioning reference signal resources.

5. The method according to claim 4, wherein a length of the first field is determined based on a maximum quantity of time units or a maximum quantity of positioning reference signal resources that can be indicated by the SCI.

6. The method according to claim 5, wherein when the N time units comprise the P preconfigured positioning reference signal resources, each time unit comprises a same quantity of preconfigured positioning reference signal resources; and

   the length of the first field is determined based on the maximum quantity of time units that can be indicated by the SCI and the quantity of preconfigured positioning reference signal resources comprised in each time unit; or the length of the first field is determined based on the maximum quantity of positioning reference signal resources that can be indicated by the SCI and the quantity of preconfigured positioning reference signal resources comprised in each time unit.

7. The method according to claim 5, wherein when the resource pool in which the N time units are located comprises the P preconfigured positioning reference signal resources, the N time units belong to a same resource pool; and

   the length of the first field is determined based on the maximum quantity of time units that can be indicated by the SCI and a quantity of preconfigured positioning reference signal resources comprised in the resource pool; or the length of the first field is determined based on the maximum quantity of positioning reference signal resources that can be indicated by the SCI and a quantity of preconfigured positioning reference signal resources comprised in the resource pool.

8. The method according to any one of claims 4 to 6, wherein the length of the first field meets the following condition:

$$\left\lceil \log_2 N_{slprs}{}^{K_{reserve}} \right\rceil,$$

wherein

$\left\lceil \log_2 N_{slprs}{}^{K_{reserve}} \right\rceil$ represents rounding on $\log_2 N_{slprs}{}^{K_{reserve}}$, $\log_2 N_{slprs}{}^{K_{reserve}}$ represents calculating the logarithm of $N_{slprs}{}^{K_{reserve}}$ with a base 2, $N_{slprs}$ represents the quantity of preconfigured positioning reference signal resources comprised in each time unit, and $K_{reserve}$ represents the maximum quantity of positioning reference signal resources that can be indicated by the SCI or the maximum quantity of time units that can be indicated by the SCI.

9. The method according to any one of claims 4 to 6, wherein the length of the first field meets the following condition:

$$\left\lceil \log_2 \left[ (N_{slprs})^{k_{reserve}-k_0} + k_1 \right] \right\rceil,$$

wherein
$N_{slprs}$ represents the quantity of preconfigured positioning reference signal resources comprised in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient.

**10.** The method according to claim 9, wherein $k_1=k_0$, $k_1=k_{reserve}$, or $k_1 = N_{slprs}$.

**11.** The method according to any one of claims 4 to 6, wherein the length of the first field meets the following condition:

$$\left\lceil log_2 \left[ \left(N_{slprs}\right)^{k_{reserve}-k_0} + \left(N_{slprs}\right)^{k_{reserve}-k_0-1} + \cdots \left(N_{slprs}\right)^0 + a \right]\right\rceil,$$

wherein

$N_{slprs}$ represents the quantity of preconfigured positioning reference signal resources comprised in each time unit, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $a$ is an integer greater than or equal to 0.

**12.** The method according to claim 11, wherein $a=0$, $a=1$, $a=k_0$, $a = k_{reserve}$, or $a = N_{slprs}$.

**13.** The method according to claim 4, 5, or 7, wherein the length of the first field meets the following condition:

$$\left\lceil \log_2 Q^{K_{reserve}} \right\rceil,$$

wherein

$\left\lceil \log_2 Q^{K_{reserve}} \right\rceil$ represents rounding on $\log_2 Q^{K_{reserve}}$, $\log_2 Q^{K_{reserve}}$ represents calculating the logarithm of $Q^{K_{reserve}}$ with a base 2, Q represents the quantity of preconfigured positioning reference signal resources comprised in the resource pool, and $K_{reserve}$ represents the maximum quantity of positioning reference signal resources that can be indicated by the SCI or the maximum quantity of time units that can be indicated by the SCI.

**14.** The method according to claim 4, 5, or 7, wherein the length of the first field meets the following condition:

$$\left[ log_2 \left[ (Q)^{k_{reserve}-k_0} + k_1 \right] \right],$$

wherein

Q represents the quantity of preconfigured positioning reference signal resources comprised in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $k_1$ is an integer greater than or equal to 0, or $k_1$ is determined based on a system coefficient.

**15.** The method according to claim 14, wherein $k_1=k_0$, $k_1=k_{reserve}$, or $k_1 = Q$.

**16.** The method according to claim 4, 5, or 7, wherein the length of the first field meets the following condition:

$$\left[ log_2 \left[ (Q)^{k_{reserve}-k_0} + (Q)^{k_{reserve}-k_0-1} + \cdots (Q)^0 + a \right] \right],$$

wherein

Q represents the quantity of preconfigured positioning reference signal resources comprised in the resource pool, $k_{reserve}$ represents the maximum quantity of positioning reference signal resources that can be indicated by the SCI, the maximum quantity of time units that can be indicated by the SCI, or a maximum quantity of positioning reference signal resources that can be indicated by the first field, $k_0$ is an integer greater than or equal to 1, and $a$ is an integer greater than or equal to 0.

**17.** The method according to claim 16, wherein $a=0$, $a=1$, $a=k_0$, $a = k_{reserve}$, or $a = Q$.

18. The method according to any one of claims 4 to 17, wherein the length of the first field is 4 bits, 8 bits, or 12 bits.

19. The method according to claim 18, wherein when the SCI indicates or is for reserving only a positioning reference signal resource in one time unit, the length of the first field is 4 bits;

when the SCI indicates or is for reserving positioning reference signal resources in two time units, the length of the first field is 8 bits; or
when the SCI indicates or is for reserving positioning reference signal resources in three time units, the length of the first field is 12 bits.

20. The method according to claim 18 or 19, wherein the length of the first field is 8 bits, 4 most significant bits in the first field indicate a positioning reference signal resource in the 1st time unit in the two time units, and 4 least significant bits in the first field indicate a positioning reference signal in the 2nd time unit in the two time units.

21. The method according to any one of claims 4 to 6, 8 to 12, or 18 to 20, wherein a value of the first field meets the following condition: $I_1 + I_2 \times N_{slprs} + \cdots I_N \times (N_{slprs})^{N-1}$, wherein $I_1$ represents an index of a positioning reference signal resource in the 1st time unit in the N time units indicated by the SCI, $I_2$ represents an index of a positioning reference signal resource in the 2nd time unit in the N time units indicated by the SCI, $I_N$ is an index of a positioning reference signal resource in the N$^{th}$ time unit in the N time units indicated by the SCI, $N_{slprs}$ represents the quantity of preconfigured positioning reference signal resources comprised in each time unit, and indexes of the preconfigured positioning reference signal resources comprised in each of the N time units are encoded from 0; or
a value of the first field meets the following condition: $I_1 + I_2 \times N_{slprs} + \cdots I_N \times (N_{slprs})^{N-1} - 1$, wherein $I_1$ represents an index of a positioning reference signal resource in the 1st time unit in the N time units indicated by the SCI, $I_2$ represents an index of a positioning reference signal resource in the 2nd time unit in the N time units indicated by the SCI, $I_N$ is an index of a positioning reference signal resource in the N$^{th}$ time unit in the time units indicated by the SCI, $N_{slprs}$ represents the quantity of preconfigured positioning reference signal resources comprised in each time unit, and indexes of the preconfigured positioning reference signal resources comprised in each of the N time units are encoded from 1.

22. The method according to any one of claims 4, 5, 7, and 13 to 20, wherein a value of the first field meets the following condition: $I_1 + I_2 \times Q + \cdots I_N \times (Q)^{N-1}$, wherein $I_1$ represents an index of a positioning reference signal resource in the 1st time unit in the N time units indicated by the SCI, $I_2$ represents an index of a positioning reference signal resource in the 2nd time unit in the N time units indicated by the SCI, $I_N$ is an index of a positioning reference signal resource in the N$^{th}$ time unit in the N time units indicated by the SCI, Q represents the quantity of preconfigured positioning reference signal resources comprised in the resource pool, and indexes of the preconfigured positioning reference signal resources comprised in the resource pool are encoded from 0; or
a value of the first field meets the following condition: $I_1 + I_2 \times Q + \cdots I_N \times (Q)^{N-1} - 1$, wherein $I_1$ represents an index of a positioning reference signal resource in the 1st time unit in the N time units indicated by the SCI, $I_2$ represents an index of a positioning reference signal resource in the 2nd time unit in the N time units indicated by the SCI, $I_N$ is an index of a positioning reference signal resource in the N$^{th}$ time unit in the N time units indicated by the SCI, Q represents the quantity of preconfigured positioning reference signal resources comprised in the resource pool, and indexes of the preconfigured positioning reference signal resources comprised in the resource pool are encoded from 1.

23. The method according to any one of claims 1 to 22, wherein frequency bands occupied by different positioning reference signal resources in the P preconfigured positioning reference signal resources have an overlapping part.

24. The method according to any one of claims 1 to 22, wherein each positioning reference signal resource in the P preconfigured positioning reference signal resources occupies a part or all of bandwidth of the resource pool.

25. The method according to any one of claims 1 to 24, wherein when the N time units comprise the P preconfigured positioning reference signal resources, configurations of preconfigured positioning reference signal resources comprised in different time units are the same.

26. The method according to any one of claims 1, and 3 to 25, wherein the method further comprises:
receiving, by the first communication apparatus, downlink control information DCI from a third communication apparatus, wherein the DCI indicates the first communication apparatus to reserve the M positioning reference signal resources.

27. The method according to claim 26, wherein the DCI further indicates the first communication apparatus to reserve the N time units.

28. The method according to any one of claims 1, and 3 to 27, wherein the method further comprises:
receiving, by the first communication apparatus, configuration information from the third communication apparatus, wherein the configuration information is for configuring the P preconfigured positioning reference signal resources.

29. A first communication apparatus, wherein the first communication apparatus comprises a transceiver module and a processing module, wherein
the transceiver module is configured to perform receiving and sending operations according to any one of claims 1, and 3 to 28, and the processing module is configured to perform a processing operation according to any one of claims 1, and 3 to 28.

30. A second communication apparatus, wherein the second communication apparatus comprises a transceiver module, and the transceiver module is configured to perform receiving and sending operations according to any one of claims 2 to 25.

31. A communication apparatus, wherein the communication apparatus comprises a processor, and the processor is configured to execute a computer program or computer instructions in a memory, to perform the method according to any one of claims 1, and 3 to 28 or the method according to any one of claims 2 to 25.

32. The communication apparatus according to claim 31, wherein the communication apparatus further comprises the memory.

33. A computer-readable storage medium, wherein the computer-readable storage medium stores a computer program; and when the computer program is executed by a communication apparatus, the communication apparatus is enabled to perform the method according to any one of claims 1, and 3 to 28 or the method according to any one of claims 2 to 25.

FIG. 1

FIG. 2

FIG. 3

FIG. 4

Subcarrier

0
1
2
3
4
5
6
7
8
9
10
11
12
13
14
15
16
17
18
19
20
21
22
23

0    Time domain symbol

FIG. 5

| Third communication apparatus | First communication apparatus | Second communication apparatus |

601b: Downlink control information DCI

601a: Configuration information (including configurations of P preconfigured positioning reference signal resources)

601: Determine sidelink information SCI (the SCI indicates M positioning reference signal resources)

602: SCI

603: Receive a positioning reference signal from the first communication apparatus based on the SCI

FIG. 6

FIG. 7

FIG. 8

FIG. 9

FIG. 10

P bits

SCI

First field

Second field

K bits

FIG. 11

Resource
pool 1

SCI
1

Resource
pool 2

FIG. 12

First communication apparatus 1300

1301

1302

Transceiver module

Processing module

FIG. 13

Second communication apparatus 1400

1401

1402

Transceiver module

Processing module

FIG. 14

FIG. 15

FIG. 16

## INTERNATIONAL SEARCH REPORT

| International application No. |
|---|
| **PCT/CN2023/112320** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 侧链路, 边链路, 定位参考信号, 侧行控制信息, 资源, 预留, 预配置, 长度, 字段, sidelink, positioning reference signal, PRS, resource, reserve, pre-configuration, length, field

### C. DOCUMENTS CONSIDERED TO BE RELEVANT

| Category* | Citation of document, with indication, where appropriate, of the relevant passages | Relevant to claim No. |
|---|---|---|
| X | HUAWEI et al. "Discussion on solutions to support SL positioning"<br>*3GPP TSG-RAN WG1 Meeting #109-e R1-2203164*, 20 May 2022 (2022-05-20),<br>sections 4-5 | 1-4, 23-33 |
| A | LG ELECTRONICS. "Discussion on potential solutions for SL positioning"<br>*3GPP TSG-RAN WG1 Meeting #109-e R1-2203720*, 20 May 2022 (2022-05-20),<br>entire document | 1-33 |
| A | CN 114257355 A (SPREADTRUM COMMUNICATIONS (SHANGHAI) CO., LTD.) 29 March 2022 (2022-03-29)<br>entire document | 1-33 |
| A | US 2022116169 A1 (TELEFONAKTIEBOLAGET LM ERICSSON (PUBL)) 14 April 2022 (2022-04-14)<br>entire document | 1-33 |
| A | WO 2022155262 A1 (IDAC HOLDINGS, INC.) 21 July 2022 (2022-07-21)<br>entire document | 1-33 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112320**

| Patent document cited in search report | | | Publication date (day/month/year) | Patent family member(s) | | | Publication date (day/month/year) |
|---|---|---|---|---|---|---|---|
| CN | 114257355 | A | 29 March 2022 | WO | 2022062891 | A1 | 31 March 2022 |
| | | | | EP | 4221033 | A1 | 02 August 2023 |
| US | 2022116169 | A1 | 14 April 2022 | WO | 2020145873 | A1 | 16 July 2020 |
| | | | | EP | 3909210 | A1 | 17 November 2021 |
| WO | 2022155262 | A1 | 21 July 2022 | CN | 116803152 | A | 22 September 2023 |
| | | | | KR | 20230131293 | A | 12 September 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210957863